# EUROPEAN PATENT APPLICATION

(11) **EP 4 772 992 A1**
(43) Date of publication of application: **08.07.2026**
(21) Application number: 24867839.3
(22) Date of filing: 30.05.2024
(51) Int. Cl.: G06F 3/12, B41J 29/38

(54) **PRINTER DEVICE, CLIENT TERMINAL, PRINTING SYSTEM, AND CONTROL METHODS THEREFOR, AND PROGRAM**

(30) Priority: 19.09.2023 JP 2023151673
(71) Applicant: Canon Kabushiki Kaisha, Tokyo 146-8501 (JP)
(72) Inventor: MORIYA, Takashi, Tokyo 146-8501 (JP)
(74) Representative: WESER & Kollegen Patentanwälte PartmbB
(86) International application number: PCT/JP2024/019831
(87) International publication number: WO 2025/062752

(57) **Abstract**

The user is allowed to appropriately set a feed direction and an image rotation angle at the time of IPP printing. A printing apparatus which receives, from a client terminal, a print job in a format in accordance with IPP (Internet Printing Protocol) and which performs printing based on the received print job, the printing apparatus having: a communication unit configured to communicate with the client terminal; a control unit configured to cause a display unit to display a first guide screen presenting a possible combination of feed directions and rotation angles of an image for the printing, where the combination can be established under a sheet size of a sheet set in a feeding mechanism; and a generation unit configured to generate first information indicating a determined combination which is presented in the first guide screen, wherein the communication unit transmits, in response to a request from the client terminal, the first information generated by the generation unit.

## Description

### Technical Field

The present invention relates to a printing system using IPP.

### Background Art

In recent years, a printing system has been spread in which in a case of inputting a print job from an information processing apparatus such as a PC or a mobile terminal into a printing apparatus, a general-purpose printing protocol included in an OS of the information processing apparatus is used without via a dedicated printer driver provided by a vendor. As an example of printing protocols (standard protocols) based on the standards in such general-purpose printing systems, IPP (Internet Printing Protocol) has been known. In a case of instructing a printer to print in a printing system using this IPP, PDL (Print Description Language) such as PWG-Raster or PDF which is compliant with IPP is used. Then, for example, in the case of PWG-Raster, it is required, as the duty on the terminal side, to appropriately rotate an original image for printing in conformity to a feed direction which can be supported by a feed tray of the printer, then convert the original image to a raster image for printing, and transmit the raster image for printing to the printer. NPL 1 defines a method in which database information containing combinations of sheet sizes, sheet types, feed trays, feed directions, and image rotation angles is constructed as a capability response of a printer, and the database information is obtained with in IPP from a terminal.

### Citation List

### Non Patent Literature

NPL 1: "PWG 5100.7-2023 IPP Job Extensions v2.1", The Printer Working Group, 2023, p. 39

### Summary of Invention

### Technical Problem

For example, in a case of printing an envelope, there are a pattern of vertically printing an address side and a pattern of horizontally printing an address side. Moreover, there are also a case of feeding an envelope while setting a flap portion of the envelope at the leading edge/trailing edge, and a case of feeding an envelope from a long side depending on the specifications of the printer. In a case where there are a plurality of combinations of feed directions and image rotation angles in printing in this way, it is difficult for the user to set an appropriate feed direction and image rotation angle for the printer to be used.

### Solution to Problem

A printing apparatus according to the present disclosure is a printing apparatus which receives, from a client terminal, a print job in a format in accordance with IPP (Internet Printing Protocol) and which performs printing based on the received print job, the printing apparatus having: a communication unit configured to communicate with the client terminal; a control unit configured to cause a display unit to display a first guide screen presenting a possible combination of feed directions and rotation angles of an image for the printing, where the possible combination can be established under a sheet size of a sheet set in a feeding mechanism; and a generation unit configured to generate first information indicating a determined combination which is presented in the first guide screen, wherein the communication unit transmits, in response to a request from the client terminal, the first information generated by the generation unit.

### Advantageous Effects of Invention

The technology of the present disclosure makes it possible for the user to appropriately set a feed direction and an image rotation angle in the case of using an IPP printing system.

Further features of the present invention will become apparent from the following description of embodiments which is made with reference to the attached drawings.

### Brief Description of Drawings

[Fig. 1] Fig. 1 is a diagram showing an example of a configuration of a printing system using IPP.
[Fig. 2] Fig. 2 is a block diagram showing a hardware configuration of a client terminal.
[Fig. 3] Fig. 3 is a diagram showing a hardware configuration of a printing apparatus.
[Fig. 4] Fig. 4 is a diagram showing a hardware configuration of a printing apparatus.
[Fig. 5] Figs. 5(a) to (c) are diagrams for explaining a flow in a case of feeding a Nagagata envelope from a rear tray and performing printing, and diagrams showing directions of a sheet at the time of setting a Nagagata envelope on a rear tray .
[Fig. 6] Figs. 6(a) to (d) are diagrams for explaining a flow in a case of feeding a Kakugata envelope from a manual feed tray and performing printing.
[Fig. 7] Fig. 7 is a table for explaining combinations of feed directions and image rotation angles for general sheets.
[Fig. 8] Fig. 8 is a table for explaining combinations of feed directions and image rotation angles for various envelopes.
[Fig. 9] Fig. 9 is an example of an IPP attribute response packet of media database information.
[Fig. 10A] Fig. 10A is an example of an IPP attribute response packet of feed completion information.
[Fig. 10B] Fig. 10B is an example of an IPP attribute response packet of feed completion information.
[Fig. 11] Fig. 11 is a flowchart showing a flow of processing relating to the setting of a sheet in a printer to be used in a case setting the sheet first.
[Fig. 12] Fig. 12 is an example of the media database information.
[Fig. 13] Figs. 13(a) and (b) are examples of a guide screen for correctly setting a feed direction.
[Fig. 14] Fig. 14 is a flowchart showing a flow of processing in a case of performing print setting with a driver of the client terminal.
[Fig. 15] Fig. 15 is an example of a print setting screen.
[Fig. 16] Fig. 16 is an example of a print setting screen.
[Fig. 17] Fig. 17 is a flowchart showing a flow of processing relating to the setting of a sheet in a printer to be used at the time of receiving a print job.
[Fig. 18] Figs. 18(a) to (c) are examples of a guide screen for appropriately setting a sheet in a printing apparatus.
[Fig. 19] Fig. 19 is an example of a response packet of media database information according to Modification 1.
[Fig. 20] Fig. 20 is an example of a packet at the time of transmitting PDL data according to Modification 2.

### Description of Embodiments

Hereinafter, modes for carrying out the present embodiments will be described with reference to the drawings and the like. Note that the following embodiments are not intended to limit the technology of the present disclosure, and all the configurations described in the following embodiments are not necessarily essential for the solution.

### [Embodiment 1]

### <System Configuration>

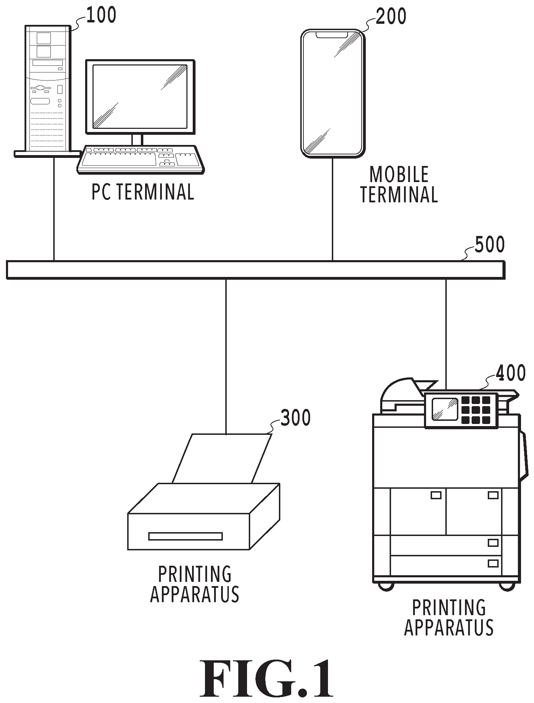

Fig. 1 is a diagram showing an example of a configuration of a printing system using IPP (Internet Printing Protocol) according to the present embodiment. The printing system of Fig. 1 is configured with a PC terminal 100 and a mobile terminal 200 as client terminals, a printing apparatus 300 and a printing apparatus 400 as printers, and a communication network 500 connecting these devices. The communication network 500 includes the Internet. The PC terminal 100 communicates with the printing apparatus 300/400 via a wired LAN and a router included in the communication network 500. The mobile terminal 200 communicates with the printing apparatus 300/400 via a wireless access point included in the communication network 500.

The printing apparatus 300 includes a cassette 310 and a rear tray 312 as a feeding mechanism, such that envelopes can be fed from the rear tray 312. Here, the printing apparatus 300 is configured such that a direction in feeding an envelope from the rear tray 312 is limited only to from a short side. On the other hand, the printing apparatus 400 includes a cassette 410 and a manual feed tray 412 as a feeding mechanism, such that envelopes can be fed from the manual feed tray 412. Here, the printing apparatus 400 is configured such that a direction in feeding an envelope from the manual feed tray 412 can be both of directions from a short side and a long side.

In a case of performing printing using IPP (hereinafter, referred to as "IPP printing"), the user activates an OS standard printing driver of the terminal and obtains information on each printer on the communication network in order to determine a difference in feed capability among printers as mentioned above. Then, the user conducts print setting with the OS standard printing driver based on the obtained information, and generates a raster image for printing while appropriately rotating an original image to be printed as necessary, and transmits the raster image for printing to the printer.

In the present embodiment, a case of performing IPP printing, in the printing apparatus 300 or the printing apparatus 400, on an envelope which has a flap and which is assumed to have a plurality of directions for address printing (vertical printing and horizontal printing) will be described. Note that the present embodiment will be described by giving a case of using IPP as a communication protocol as an example, but is not limited to this. For example, it is also possible to apply the present embodiment to printing services using other general-purpose printing protocols such as WSD (Web Services on Devices).

### <Hardware Configurations>

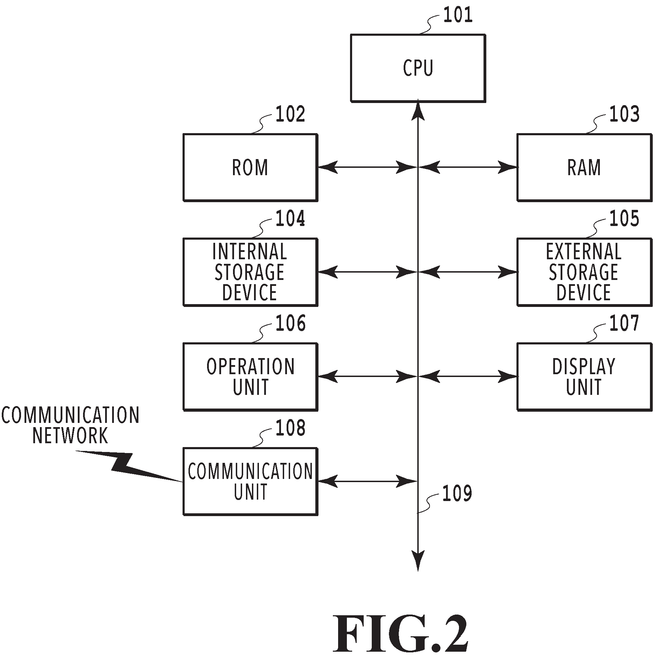

Fig. 2 to Fig. 4 are diagrams showing examples of hardware configurations of the respective apparatuses included in the printing system of Fig. 1. Hereinafter, the hardware configuration of each apparatus will be described.

Fig. 2 is a block diagram showing a hardware configuration of a client terminal which is common to the PC terminal 100 and the mobile terminal 200. A CPU 101 reads out programs from a ROM 102, an internal storage device 104, and an external storage device 105, deploys the programs onto a RAM 103, and controls an operation of the entire terminal via a system bus 109. The ROM 102 stores a control program and the like for the CPU 101. The RAM 103 provides a work area for temporarily storing a program and image data and operating the processing of the terminal at a high speed. The internal storage device 104 and the external storage device 105 store an operating system (OS), various application programs, image data, and the like. An OS standard printing driver (hereinafter, referred to simply as a "driver") is initially installed in the PC terminal 100 and the mobile terminal 200. An operation unit 106 controls, for example, a keyboard and a mouse in the PC terminal 100, or, for example, a touch panel in the mobile terminal 200 to receive instructions from the user. A display unit 107 is a liquid-crystal display or the like which presents various pieces of information to the user. A communication unit 108 is connected to the communication network 500, and performs connection to an Internet provider, and data communication with the printing apparatus 300 or the printing apparatus 400. Note that it is assumed to use a publicly-known method such as mDNS, HTTP, IPP, or TLS for the connection to the communication network 500 and security.

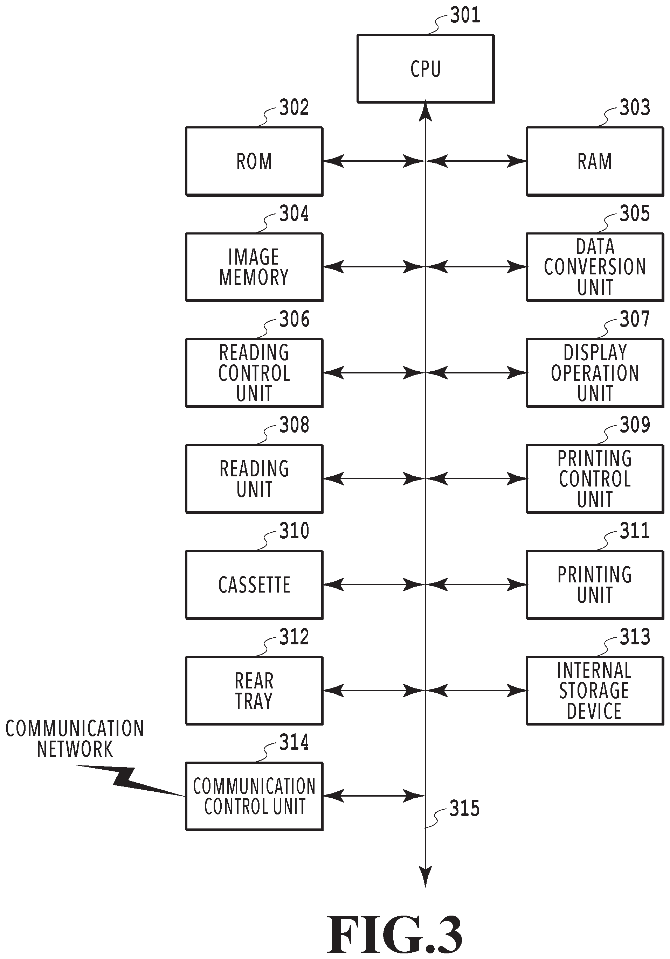

Fig. 3 is a block diagram showing a hardware configuration of the printing apparatus 300. A CPU 301 reads out programs from a ROM 302 and an internal storage device 313, deploys the programs onto a RAM 303, and controls an operation of the entire printing apparatus 300 via a system bus 315. The ROM 302 stores a control program to be executed by the CPU 301, and data such as data tables and an embedded operating system (OS) program. Under the management of the embedded OS stored in the ROM 302, the CPU 301 performs software execution controls such as scheduling, task switch, and interrupt processing. The RAM 303 is configured with an SRAM (Static Random Access Memory) or the like, and data is held in the RAM 303 with a primary battery for data backup, which is not shown. In the RAM 303, program control variables and the like whose data should not be deleted are stored. An image memory 304 is configured with a DRAM (Dynamic Random Access Memory) or the like, and accumulates image data. In addition, a partial region of the image memory 304 is used as a work area for executing software processing. A data conversion unit 305 performs conversion processing necessary for inputted image data, such as analysis of a page description language (PDL) and CG rasterization of character data. Here, PDL only has to be compliant with IPP, and includes, for example, PWG-Raster, PDF, JPEG, PCL, and the like. Among these PDLs compliant with IPP, there are rotation supporting types which can include designation relating to image rotation like PDF and non-rotation supporting types which cannot include designation relating to image rotation like PWG-Raster. For this reason, in a case where a printer to be used supports only the latter non-rotation supporting-type PDL, it is necessary to convert an original image into a raster image in which the original image is rotated to an appropriate orientation on the terminal side, and provide the raster image to the printer. Various processings disclosed in the present embodiment are made on the premise that there are two different types of a rotation supporting type and a non-rotation supporting type in formats of PDL to be used in the IPP printing. A reading control unit 306 performs various image processings such as binarization processing and halftone processing on image signals, which are obtained by a reading unit 308 optically reading and converting an original document to electric image data, via an image processing control unit which is not shown, and outputs high-definition image data. A display operation unit 308 is configured with minimum keys such as numerical value input keys, a mode setting key, a determination key, and a cancel key, LEDs (light-emitting diodes), a 7-seg display, and the like, and performs presentation of information to the user and reception of instruction inputs. A printing control unit 309 performs various image processings such as smoothing processing, density correction processing, and color correction on image data to be printed, via an image processing control unit which is not shown, to convert the image data to higher-definition image data, and outputs the higher-definition image data to a printing unit 311. A cassette 310 is configured with one cassette in which sheets having a predetermined size are stacked, and sheets are fed from a cassette corresponding to a sheet size designated in a print job. The cassette includes a sheet presence/absence detection sensor which detects whether or not a sheet is stacked, and a sheet width sensor which detects the width of the stacked sheet. A rear tray 312 similarly includes a sheet presence/absence detection sensor and a sheet width sensor. The feed directions of the cassette 310 and the rear tray 312 are limited to only from a short side of a sheet for any sheet size, and do not support feeding from a long side of a sheet. Note that there is a case where the rear tray 312 does not include a sheet width sensor depending on specifications of a printer. In this case, a sheet size list may be displayed on the display operation unit 307 at a timing at which a sheet is detected by the sheet presence/absence detection sensor to allow the user to designate a sheet size set by the user. A communication control unit 314 is connected to the communication network 500, and performs a communication control such as connection to an Internet provider. Note that for the connection to the communication network 500 and security, a publicly-known method such as mDNS, HTTP, IPP, or TLS is used. An internal storage device 313 is, for example, an HDD, and is used for storing size information on sheets set in the cassette 310 and the rear tray 312, image data, and the like, for example.

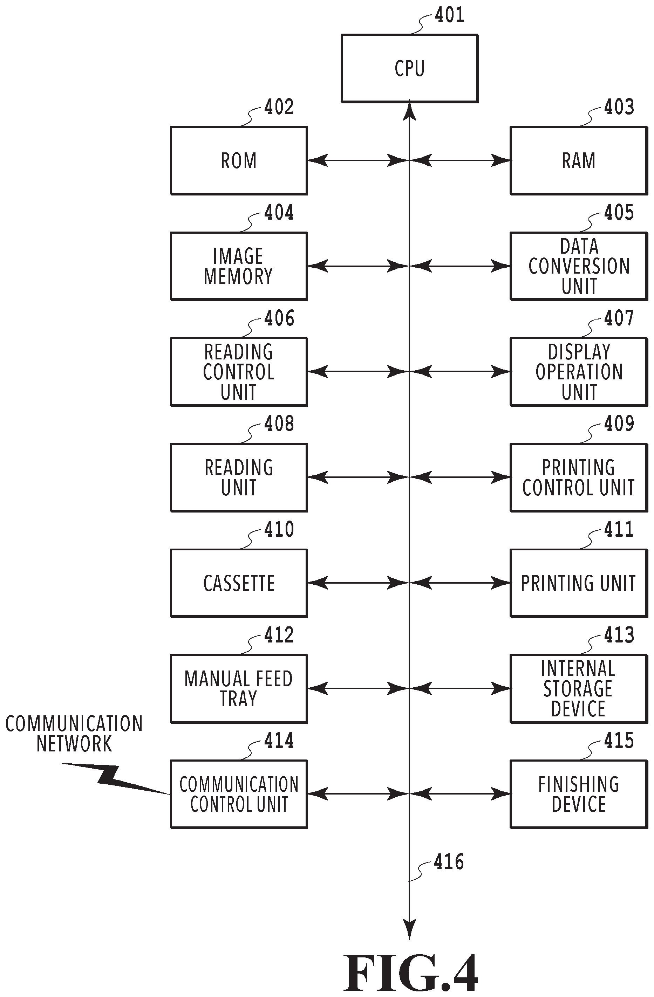

Fig. 4 is a block diagram showing a hardware configuration of the printing apparatus 400. Many hardware configurations are common to the printing apparatus 400 and the printing apparatus 300. Although the descriptions of common hardware configurations are omitted, main differences are a cassette 410, a manual feed tray 412, and a finishing device 415, and the overview of these is as follows.

The cassette 410 included in the printing apparatus 400 is of multi-stage type including a plurality of cassettes, and it is also possible to stack sheets having different sizes in the respective cassettes. The manual feed tray 412 is located on the right side surface as viewed from the front face of the printing apparatus 400, and is capable of supporting feeding from a long side of a sheet. The feeding from each cassette included in the cassette 410 can be made only from a short side of a sheet, and the cassette does not support feeding from a long side. On the other hand, the manual feed tray 412 is configured to be capable of supporting feeding from a long side of a sheet as well as feeding from a short side of a sheet. The finishing device 415 is a mechanism for performing finishing processing such as a stapling function, a folding function, and a punching function on printed sheets.

### <Flow of IPP Printing>

Next, a flow of performing IPP printing by using a PWG-Raster format as PDL will be described for each of the printing apparatus 300 and the printing apparatus 400 giving the case of printing an address on an envelope as an example.

### <<Case of Printing Apparatus 300>>

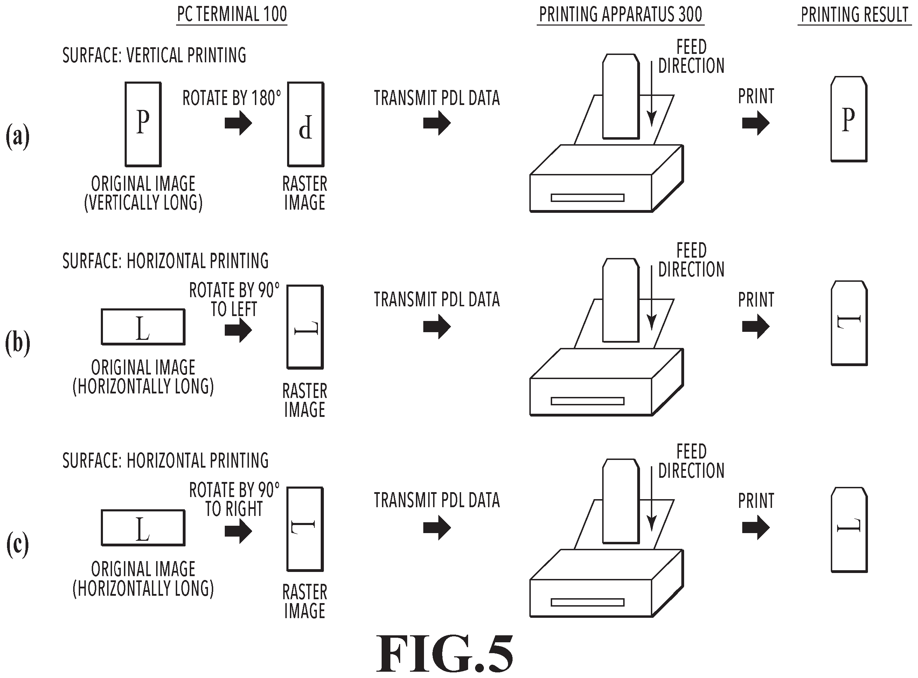

Figs. 5(a) to (c) are diagrams showing possible patterns in a case of feeding an envelope of Nagagata #4 from the rear tray 312 of the printing apparatus 300 and printing the envelope. As mentioned above, the feed direction in the case of using the rear tray 312 of the printing apparatus 300 is limited to only from the short side. Then, in a case of printing an envelope, the feed direction is limited also in terms of a flap portion as shown in Figs. 5(a) to (c). That is, the rear tray 312 does not support feeding in which a flap portion of an envelope is set at the leading edge of the sheet, and it is necessary for the user to set an envelope such that the flap portion of the envelope is located at the trailing edge relative to the rear tray 312.

Fig. 5(a) is a diagram showing a flow of printing in a case of vertically printing an address on a surface of an envelope. An original image of a character string to be the address is vertically long (Portrait). Then, it is necessary for the driver of the terminal to rotate the original image to an appropriate orientation (that is, an orientation in which the characters are oriented correctly in a state where a flap portion of the envelope is located on the upper side), then convert the original image to a raster image, and transmit the raster image to the printing apparatus 300. Now, since it is necessary to feed the envelope such that the flap portion of the envelope is always located at the trailing edge relative to the rear tray 312, the driver transmits, to the printing apparatus 300, PDL data of a vertically long raster image obtained by rotating the vertically long original image by 180 degrees to be vertically flipped. Then, the user sets the envelope such that the flap portion is at the trailing edge relative to the rear tray 312 of the printing apparatus 300. As a result, the orientation of the envelope fed from the rear tray 312 and the orientation of the raster image are brought into a correct relation, so that a printing result intended by the user is obtained.

Fig. 5(b) is a diagram showing a flow of printing in a case of horizontally printing an address on a surface of an envelope and in a case where a flap portion of the envelope is desired to be oriented to the left side if the address after the printing is viewed correctly. An original image of a character string to be the address is horizontally long (Landscape). Then, it is necessary for the driver of the terminal to rotate the original image to an appropriate orientation (that is, an orientation in which the characters are inclined clockwise by 90 degrees in a state where a flap portion of the envelope is located on the upper side), then convert the original image to a raster image, and transmit the raster image to the printing apparatus 300. Now, since it is necessary to feed the envelope such that the flap portion of the envelope is always located at the trailing edge relative to the rear tray 312, the driver transmits, to the printing apparatus 300, PDL data of a vertically long raster image obtained by rotating the horizontally long original image by 90 degrees to the left. Then, the user sets the envelope such that the flap portion is at the trailing edge relative to the rear tray 312 of the printing apparatus 300. As a result, the orientation of the envelope fed from the rear tray 312 and the orientation of the raster image are brought into a correct relation, so that a printing result intended by the user is obtained.

Fig. 5(c) is a diagram showing a flow of printing in a case of horizontally printing an address on a surface of an envelope and in a case where a flap portion of the envelope is desired to be oriented to the right side if the address after the printing is viewed correctly. An original image of a character string to be the address is horizontally long (Landscape). Then, it is necessary for the driver of the terminal to rotate the original image to an appropriate orientation (that is, an orientation in which the characters are inclined counterclockwise by 90 degrees in a state where a flap portion of the envelope is located on the upper side), then convert the original image to a raster image, and transmit the raster image to the printing apparatus 300. Now, since it is necessary to feed the envelope such that the flap portion of the envelope is always located at the trailing edge relative to the rear tray 312, the driver transmits, to the printing apparatus 300, PDL data of a vertically long raster image obtained by rotating the horizontally long original image by 90 degrees to the right. Then, the user sets the envelope such that the flap portion is at the trailing edge relative to the rear tray 312 of the printing apparatus 300. As a result, the orientation of the envelope fed from the rear tray 312 and the orientation of the raster image are brought into a correct relation, so that a printing result intended by the user is obtained.

As mentioned above, in all the patterns of Figs. 5(a) to (c), the orientation of a raster image of PDL data received by the printing apparatus 300 becomes vertically long. In the layer of IPP, information with which it can be grasped how the driver rotated an original image is not included. For this reason, the driver of the terminal writes information on the feed direction and the image rotation angle into header information of PDL data, and transmits the PDL data. In order to print in a correct orientation, the printing apparatus 300 determines, based on the header information of the received PDL data, which case of Figs. 5(a) to (c) the printing is, and performs the printing.

### <<Case of Printing Apparatus 400>>

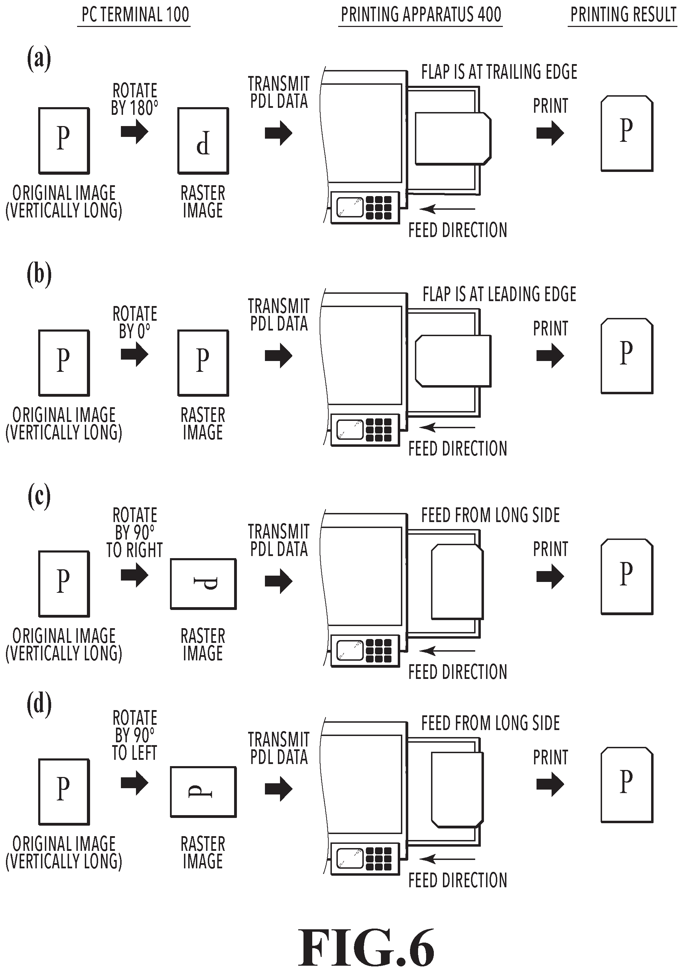

Figs. 6(a) to (d) are diagrams showing possible patterns in a case of feeding an envelope of Kakugata #2 from the manual feed tray 312 of the printing apparatus 400 and printing the envelope. As mentioned above, the feed direction in the case of using the manual feed tray 412 of the printing apparatus 400 can be from both of a short side and a long side. In addition, both of such feed that a flap portion of an envelope is located at the leading edge relative to the manual feed tray 412 and such discharge that a flap portion of an envelope is located at the trailing edge are possible. Here, only a case where an original image of character strings to be an address is vertically long (Portrait) will be described; however, in a case where an original image is horizontally long (Landscape) as well, printing is performed along the same idea.

Fig. 6(a) is a flow of printing in a case of feeding an envelope from a short side of the envelope with a flap portion of the envelope being located at the trailing edge relative to the manual feed tray 412 while the flap portion is brought on the upper side in a case where an address after the printing is viewed correctly. Now, an original image of character strings to be the address is vertically long (Portrait). Then, it is necessary for the driver of the terminal to rotate the original image to an appropriate orientation (that is, an orientation in which the characters are oriented correctly in a state where the flap portion of the envelope is located on the upper side), then convert the original image to a raster image, and transmit the raster image to the printing apparatus 300. Since the envelope is fed with the flap portion at the trailing edge relative to the manual feed tray 412, the driver transmits, to the printing apparatus 400, PDL data of a vertically long raster image obtained by rotating the vertically long original image by 180 degrees to be vertically flipped. Then, the user sets the envelope such that the flap portion is at the trailing edge relative to the manual feed tray 412 of the printing apparatus 400. As a result, the orientation of the envelope fed from the manual feed tray 412 and the orientation of the raster image are brought into a correct relation, so that a printing result intended by the user is obtained.

Fig. 6(b) is a flow of printing in a case of feeding an envelope from a short side of the envelope with a flap portion of the envelope being located at the leading edge relative to the manual feed tray 412 while the flap portion is brought on the upper side in a case where an address after the printing is viewed correctly. Since the envelope is fed with the flap portion at the leading edge to the manual feed tray 412, the driver converts a vertically long original image to a raster image as it is (image rotation angle: 0 degrees), and transmits PDL data to the printing apparatus 400. Then, the user sets the envelope such that the flap portion is at the leading edge relative to the manual feed tray 412 of the printing apparatus 400. As a result, the orientation of the envelope fed from the manual feed tray 412 and the orientation of the raster image are brought into a correct relation, so that a printing result intended by the user is obtained. Note that an offset of a printing start position of an original image occurs by the width of the flap portion unlike the case of Fig. 6(a). For this reason, printing may be performed with the flap portion being folded to the inner side.

Fig. 6(c) is a flow of printing in a case of feeding an envelope from a long side of the envelope with a flap portion of the envelope being located on the right side in the feed direction relative to the manual feed tray 412 while the flap portion is brought on the upper side in a case where an address after the printing is viewed correctly. In this case, since the envelope is fed such that the flap portion is brought on the upper side in the feed direction toward the left on the drawing, the driver transmits, to the printing apparatus 400, PDL data of a horizontally long raster image obtained by rotating the vertically long original image by 90 degrees to the right. Then, the user sets the envelope such that the flap portion is on the right side in the feed direction relative to the manual feed tray 412 of the printing apparatus 400. As a result, the orientation of the envelope fed from the manual feed tray 412 and the orientation of the raster image are brought into a correct relation, so that a printing result intended by the user is obtained.

Fig. 6(d) is a flow of printing in a case of feeding an envelope from a long side of the envelope with a flap portion of the envelope being located on the left side in the feed direction relative to the manual feed tray 412 while the flap portion is brought on the upper side in a case where the address after the printing is viewed correctly. In this case, since the envelope is fed such that the flap portion is brought on the lower side in the feed direction toward the left on the drawing, the driver transmits, to the printing apparatus 400, PDL data of a horizontally long raster image obtained by rotating the vertically long original image by 90 degrees to the left. Then, the user sets the envelope such that the flap portion is on the left side in the feed direction relative to the manual feed tray 412 of the printing apparatus 400. As a result, the orientation of the envelope fed from the manual feed tray 412 and the orientation of the raster image are brought into a correct relation, so that a printing result intended by the user is obtained.

### <Operation Conditions at the Time of Printing>

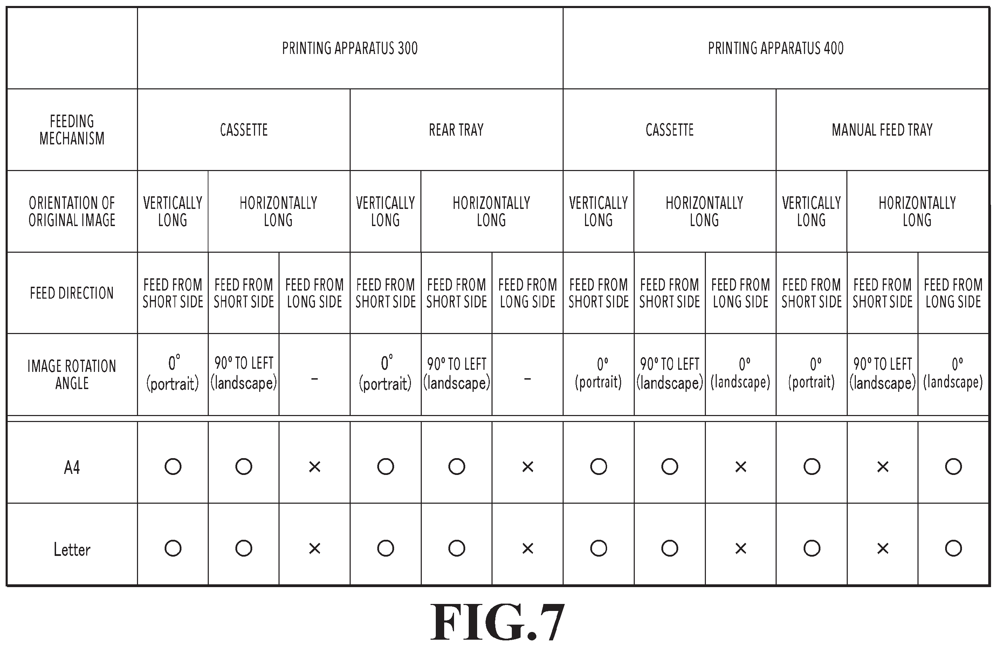

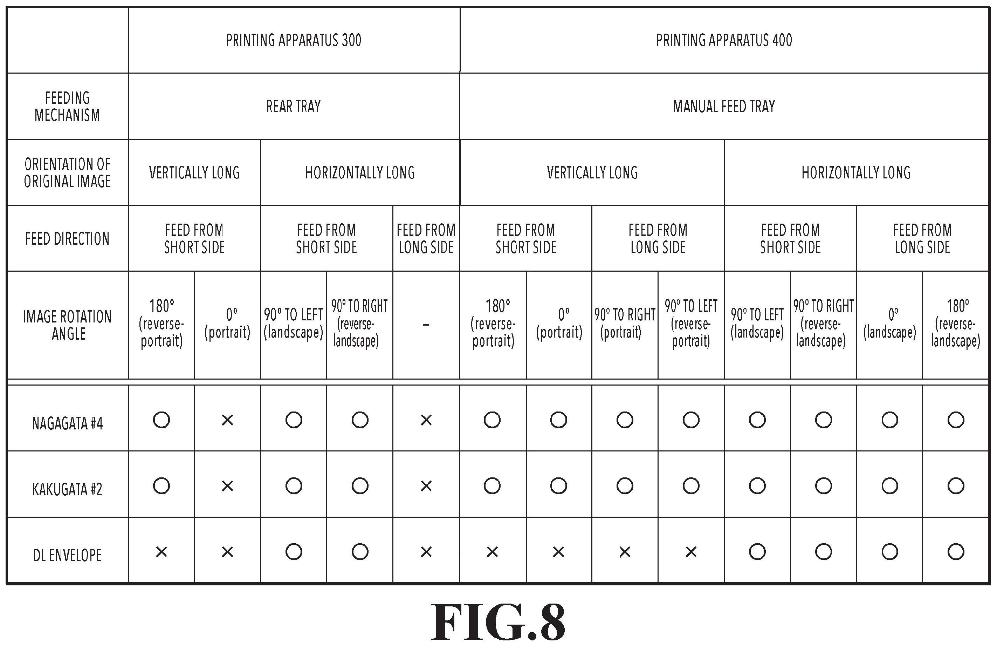

Fig. 7 and Fig. 8 are tables in which operation conditions at the time of printing in the printing apparatus 300/400 are summarized. Fig. 7 is a table about A4 and Letter which are representative examples of general sheets, and Fig. 8 is a table about Nagagata #4, Kakugata #2, and DL which are representative examples of envelopes. In the tables of Fig. 7 and Fig. 8, the mark "∘" indicates that it is supported, and the mark "×" indicates that is not supported. Based on combinations of those supported which are shown in these tables, media database information, which will be described later, is generated.

First, four items contained in the tables of Fig. 7 and Fig. 8, that is, "FEEDING MECHANISM", "ORIENTATION OF ORIGINAL IMAGE", "FEED DIRECTION", and "IMAGE ROTATION ANGLE" will be described.

The "FEEDING MECHANISM" indicates the content of feeding units included in each printer, and indicates that the printing apparatus 300 includes the cassette 310 and the rear tray 312, and the printing apparatus 400 includes the cassette 410 and the manual feed tray 412. Note that in a case of printing an envelope, the feed tray (the rear tray 312 or the manual feed tray 412) is normally used, and thus, a cassette as the "FEEDING MECHANISM" is omitted in the table of Fig. 8.

The "ORIENTATION OF ORIGINAL IMAGE" indicates an orientation of an original image to be referred to as a file to be printed in a print setting screen which is displayed at the time when the driver is activated, and can take a value of "VERTICALLY LONG (Portrait)" or "HORIZONTALLY LONG (Landscape)". In a case where the file to be printed is, for example, a photograph, and the user selects "HORIZONTALLY LONG" on the print setting screen, the original image of the photograph is displayed in a horizontally long manner as a preview. In this case, the orientation of original image is initially stored as "VERTICALLY LONG", and in a case where "HORIZONTALLY LONG" is selected on the print setting screen, the original image is rotated by 90 degrees to the left in the preview display.

The "FEED DIRECTION" indicates an orientation of a sheet or an envelope to be fed, in accordance with the feeding mechanism included in the printer, and can take a value of "FEED FROM SHORT SIDE (Short-Edge-First)" or "FEED FROM LONG SIDE (Long-Edge-First)".

The "IMAGE ROTATION ANGLE" indicates an image rotation angle at the time when PDL data is transmitted in a format of non-rotation supporting-type PDL (for example, PWG-Raster) from the terminal. The "IMAGE ROTATION ANGLE" can take an attribute value of 0 degrees (portrait), 180 degrees (reverse-portrait), 90 degrees to left (landscape), or 90 degrees to right (reverse-landscape).

### <<Case of A4 or Letter>>

In a case of printing a sheet of "A4" or "Letter", if the "ORIENTATION OF ORIGINAL IMAGE" is determined in either of the cassette 310 and the rear tray 312 of the printing apparatus 300, the combination of the "FEED DIRECTION" and the "IMAGE ROTATION ANGLE" is determined to one. For example, in a case where a sheet to be used is "A4" and the "ORIENTATION OF ORIGINAL IMAGE" is "HORIZONTALLY LONG", the rear tray 312 supports only feed from a short side (see Fig. 7). For this reason, the "IMAGE ROTATION ANGLE" in this case is determined to one, that is, "90 DEGREES TO LEFT" (see Fig. 7).

The same applies to the printing apparatus 400, and in a case where the sheet size is "A4" or "Letter" in either of the cassette 410 and the manual feed tray 412, if the "ORIENTATION OF ORIGINAL IMAGE" is determined, the combination of the "FEED DIRECTION" and the "IMAGE ROTATION ANGLE" is determined to one. For example, in a case where a sheet to be used is "A4" and the "ORIENTATION OF ORIGINAL IMAGE" is "HORIZONTALLY LONG", the manual feed tray 412 supports only feed from a long side (see Fig. 7). For this reason, the "IMAGE ROTATION ANGLE" in this case is determined to one, that is, "0 DEGREES".

### <<Case of Envelope>>

In a case of printing "NAGAGATA #4", "KAKUGATA #2", or "DL ENVELOPE", in either of the printing apparatus 300 and the printing apparatus 400, even if "ORIENTATION OF ORIGINAL IMAGE" is determined, the combination of the "FEED DIRECTION" and the "IMAGE ROTATION ANGLE" is not necessarily determined to one. In the example of the present embodiment, in the case of the printing apparatus 300, there are the following three combinations.
1) Orientation of original image: Vertically long, Feed from short side, Rotation angle: 180 degrees
2) Orientation of original image: Horizontally long, Feed from short side, Rotation angle: 90 degrees to left
3) Orientation of original image: Horizontally long, Feed from short side, Rotation angle: 90 degrees to right

Then, in the case of the printing apparatus 400, there are following eight combinations.
1) Orientation of original image: Vertically long, Feed from short side, Rotation angle: 180 degrees
2) Orientation of original image: Vertically long, Feed from short side, Rotation angle: 0 degrees
3) Orientation of original image: Vertically long, Feed from long side, Rotation angle: 90 degrees to right
4) Orientation of original image: Vertically long, Feed from long side, Rotation angle: 90 degrees to left
5) Orientation of original image: Horizontally long, Feed from short side, Rotation angle: 90 degrees to left
6) Orientation of original image: Horizontally long, Feed from a short side, Rotation angle: 90 degrees to right
7) Orientation of original image: Horizontally long, Feed from long side, Rotation angle: 0 degrees
8) Orientation of original image: Horizontally long, Feed from long side, Rotation angle: 180 degrees

For example, a case of printing an envelope of Nagagata #4 by using the rear tray 312 of the printing apparatus 300 is considered. Even if it is determined that the "ORIENTATION OF ORIGINAL IMAGE" is "HORIZONTALLY LONG" and the "FEED DIRECTION" is "FEED FROM SHORT SIDE" in this case, there remain two possibilities for the "IMAGE ROTATION ANGLE", "90 DEGREES TO LEFT" and "90 DEGREES TO RIGHT". This means that in a case where the driver generates a print job in a format in accordance with IPP, even if all the "SHEET SIZE", the "FEEDING MECHANISM", the "ORIENTATION OF ORIGINAL IMAGE", and the "FEED DIRECTION" are determined, the "IMAGE ROTATION ANGLE" cannot be narrowed down to one.

### <Capability Response of Printer>

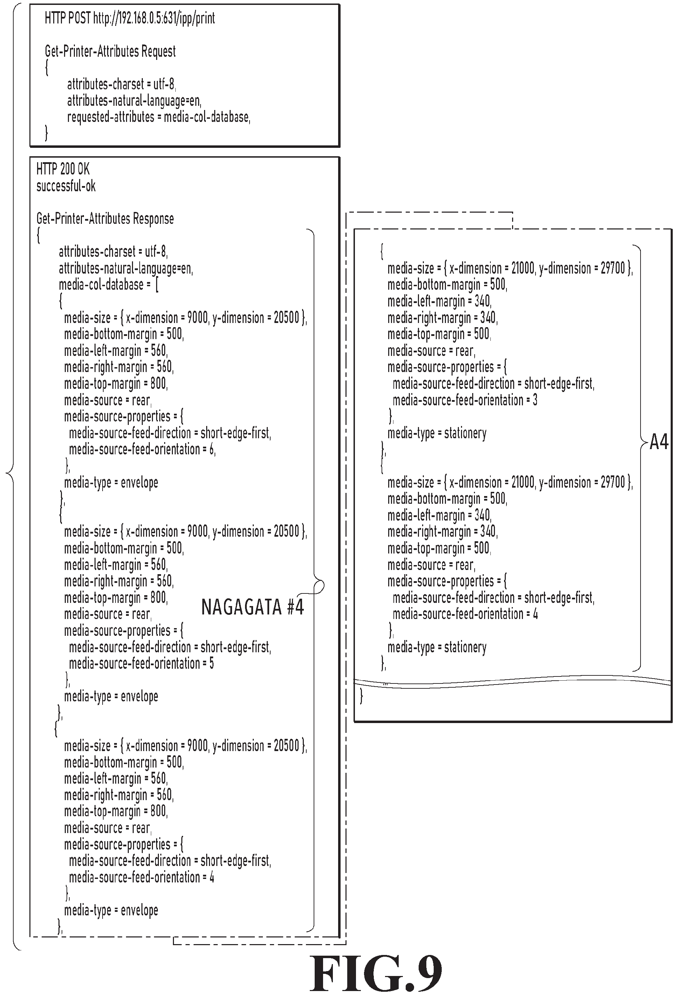

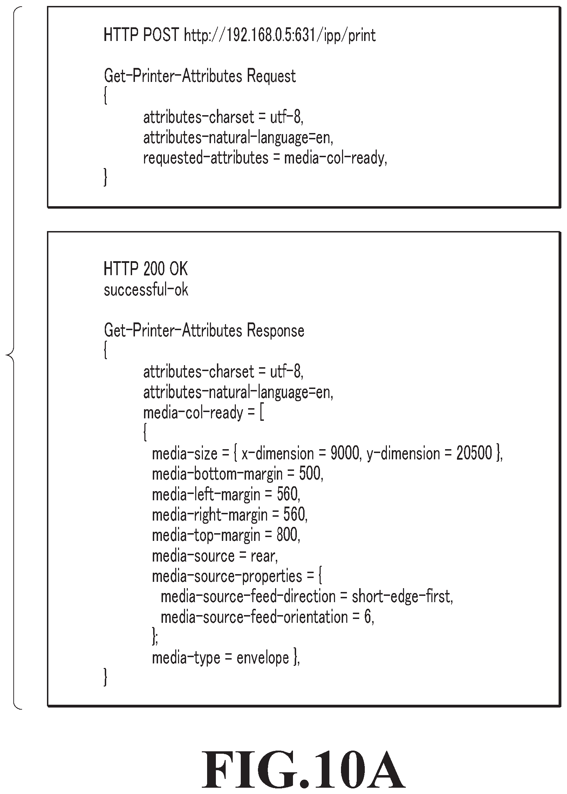

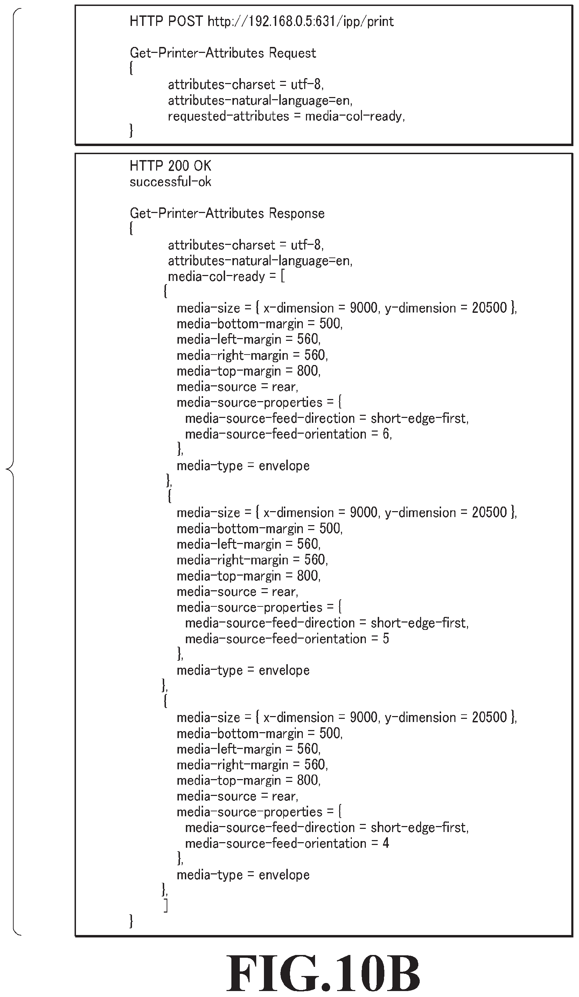

Subsequently, packets at the time of a capability response by the printing apparatus 300/400 will be described. Fig. 9 is an example of an IPP attribute response packet of media database information of the printing apparatus 300, in which part of the IPP attribute response packet is extracted. Fig. 10A and Fig. 10B are examples of IPP attribute response packets of feed completion information of the printing apparatus 300. In IPP, two attributes of media database (media-col-database) and feed completion (media-col-ready) are defined. In each attribute, an attribute of media feed property (media-source-properties) is defined. Moreover, attributes of media feed property include a feed direction (media-source-feed-direction) attribute and an image rotation (media-source-feed-orientation) attribute. In this case, an attribute value which the feed direction attribute can take is "long side (long-edge-first)" or "short side (short-edge-first)". In addition, an attribute value which the image rotation attribute can take is "0 degrees (portrait)", "180 degrees (reverse-portrait)", "90 degrees to left (landscape)", or "90 degrees to right (reverse-landscape)".

The capability response of media database information using the response packet shown in Fig. 9 is performed regardless of whether a sheet is actually set in the feeding mechanism. For this reason, the capability response can be said to be a response of static database information. In contrast, the capability response of feed completion information using the response packets shown in Fig. 10A and Fig. 10B is performed by extracting the type and the size of a sheet actually set in the feeding mechanism and a feed direction and an image rotation angle which correspond to the set sheet. For this reason, the capability response can be said to be a response of dynamic database information. The descriptive content in feed completion information is normally a descriptive content to which a descriptive content of media database information is narrowed down.

### <<Response Packet of Media Database Information>>

The example of a response packet of media database information of Fig. 9 only shows the description of information on the envelope of Nagagata #4 and A4 from the rear tray 312, and the other description is omitted. Referring to the description relating to Nagagata #4, the attribute value of the feed direction (media-source-feed-direction) in the media feed property (media-source-properties) is only "Short-Edge-First". This coincides with the content described in the aforementioned table of Fig. 7. On the other hand, as the attribute values of the image rotation (media-source-feed-orientation) in the media feed property (media-source-properties), three attribute values, "reverse-portrait (6)", "landscape (4)", and "reverse-landscape (5)" are described. This also coincides with the content described in the aforementioned table of Fig. 7. Note that numerical values in parentheses are numerical values associated with the respective contents one by one, which are specified in the standard IPP specifications of the PWG.

### <<Response Packets of Feed Completion Information>>

The difference between the response packet shown in Fig. 10A and the response packet shown in Fig. 10B is whether an envelope of Nagagata #4 is set in the rear tray 312 at a time point at which to perform a capability response of feed completion information. In the example of the response packet shown in Fig. 10A, the attribute value of the feed direction (media-source-feed-direction) is only "Short-Edge-First", and the attribute value of the image rotation (media-source-feed-orientation) is also only "reverse-portrait". That is, the combination of the feed direction and the image rotation angle is narrowed down to one. On the other hand, in the example of the response packet shown in Fig. 10B, the combination is not narrowed down to one. First, the attribute value of the feed direction (media-source-feed-direction) is only "Short-Edge-First" in the same manner. However, as the attribute values of the image rotation (media-source-feed-orientation), three attribute values, "reverse-portrait", "landscape", and "reverse-landscape", are described. That is, as the capability responses at a time point at which a print job has been transmitted but an envelope of Nagagata #4 has not been set on the rear tray 312, there are a plurality of possible combinations of feed directions and image rotation angles.

### <Processing Flow of IPP Printing>

In a case of actually performing IPP printing, there are a case where printing is instructed by the driver after a sheet is set in the printer to be used, and a case where printing is instructed by the driver first, and then sheet is set in the printer to be used. Hereinafter, the processing flow of each case will be described.

### <<Case of Setting Sheet First, and Thereafter Performing Printing instruction>>

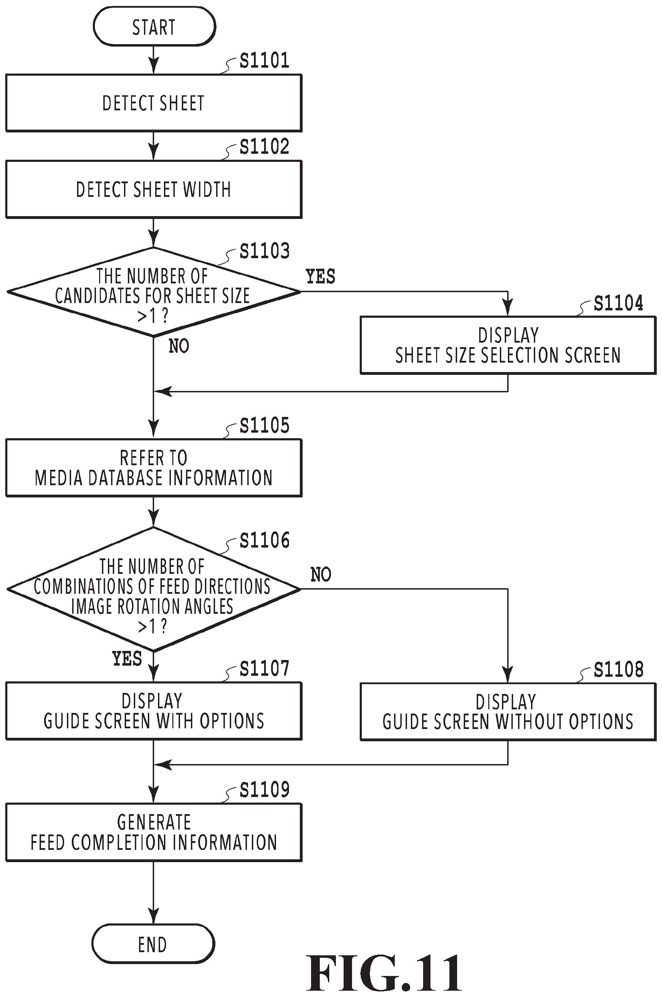

Fig. 11 is a flowchart showing a flow of processing relating to the setting of a sheet in a printer to be used in a case of setting the sheet before the transmission of a print job. The present flow is implemented by the CPU 301/401 of the printing apparatus 300/400 reading out a predetermined program from the ROM 302/402, deploying the predetermined program onto the RAM 303/403, and executing the predetermined program. Note that in the following description, sign "S" means a step. In addition, in the following description, the rear tray 312 of the printing apparatus 300 and the manual feed tray 412 of the printing apparatus 400 are collectively referred to as a "feed tray".

In S1101, it is detected by the sheet presence/absence detection sensor that a sheet is set in the cassette or the feed tray, which is the feeding mechanism.

In S1102, the width of the set sheet is detected by the sheet width sensor in the feeding mechanism where it has been detected that the sheet has been set.

In S1103, based on the detected width of the sheet, it is determined whether or not there are a plurality of sheet size candidates which the own apparatus can support. For example, since the short side of A4 and the long side of A5 are the same 210 mm, in a case where the detected sheet width is 210 mm, there are a possibility that a A5 sheet has been set from the long side and a possibility that a A4 sheet has been set from the short side. Hence, there are a plurality of sheet size candidates. In a case where both cases where a sheet is placed such that the long side comes to the sheet width sensor and where a sheet is placed such that the short side comes to the sheet width sensor can be inferred in this way, and which case the printing is cannot be determined only from the detected sheet width, the processing proceeds to S1104. On the other hand, in a case where there is only one sheet size which can be inferred from the detected sheet width (for example, if the sheet width is 216 mm, there is no candidates other than the letter size), the processing proceeds to S1105. Note that in the case of specifications in which the feed direction is limited to only from the short side as in the printing apparatus 300 of the present embodiment, for example, the configuration that the feed direction is only from the short side may be specified in the feed tray itself such that the determination is performed while eliminating a sheet width of the case where a sheet is fed from the long side in the present step.

In S1104, a selection screen is displayed which allows the user to select a size of the actually set sheet (=the orientation of the sheet) from among sheet size candidates inferred from the detected sheet width. Here, the printing apparatus 300 of the present embodiment does not support the feed from a long side. In such a case, a configuration in which a warning mark "!" is displayed together with a sheet size corresponding to the feed from a long side, or the like may be employed. Then, in a case where the user has selected a sheet size which is not supported regardless of the warning, such a message that "The sheet size is not supported. Please set the sheet in a correct orientation." may be displayed, for example. Upon receipt of the selection of a sheet size which is supported from among the sheet size candidates, the processing proceeds to S1105.

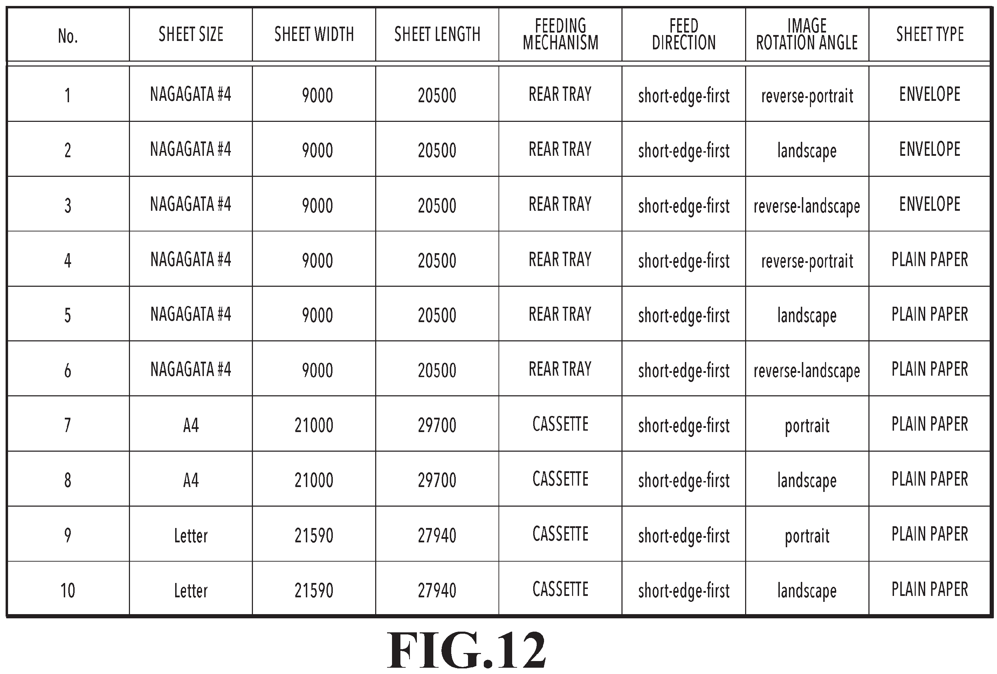

In S1105, by referring to media database information, media information which matches the size of the set sheet is obtained. Here, it is assumed that for example, the media database information is generated and initialized at the time of turning on the power of the printer, and is stored in the internal storage device 313 in advance. Fig. 12 is an example of the media database information of the printing apparatus 300. For each sheet size which can be supported by the printing apparatus 300, information on sheet width, sheet length, feeding mechanism , feed direction , image rotation angle, and sheet type are specified. Here, the reason why as a sheet type of Nagagata #4, "plain paper" is registered in addition to "envelope" is that the convenience of the user in printing an envelope is taken into consideration. In addition, there is also a case where some OSs do not support "envelope" as a sheet type. In this case as well, there is a case where "plain paper" is registered as the sheet type of an envelope. Now, if an envelope of Nagagata #4 has been set on the rear tray 312 of the printing apparatus 300, the media database information of Fig. 12 is searched for "sheet size=Nagagata #4", and records of No. 1 to No. 6 are extracted.

In S1106, the content of a guide screen display to be executed next is switched based on the records extracted from the media database information in S1105. Specifically, if there are a plurality of "combinations of feed directions and image rotation angles" which are be specified from the extracted records and which can be established, the processing proceeds to S1107, and if there is only one combination, the processing proceeds to S1108. In the aforementioned case where an envelope of Nagagata #4 has been set on the rear tray 312 of the printing apparatus 300, there are three combinations described below, and the processing thus proceeds to S1107.
- Combination 1:
   Feed direction=short-edge-first
   Rotation angle=reverse-portrait
- Combination 2:
   Feed direction=short-edge-first
   Rotation angle=landscape
- Combination 3:
   Feed direction=short-edge-first
   Rotation angle=reverse-landscape

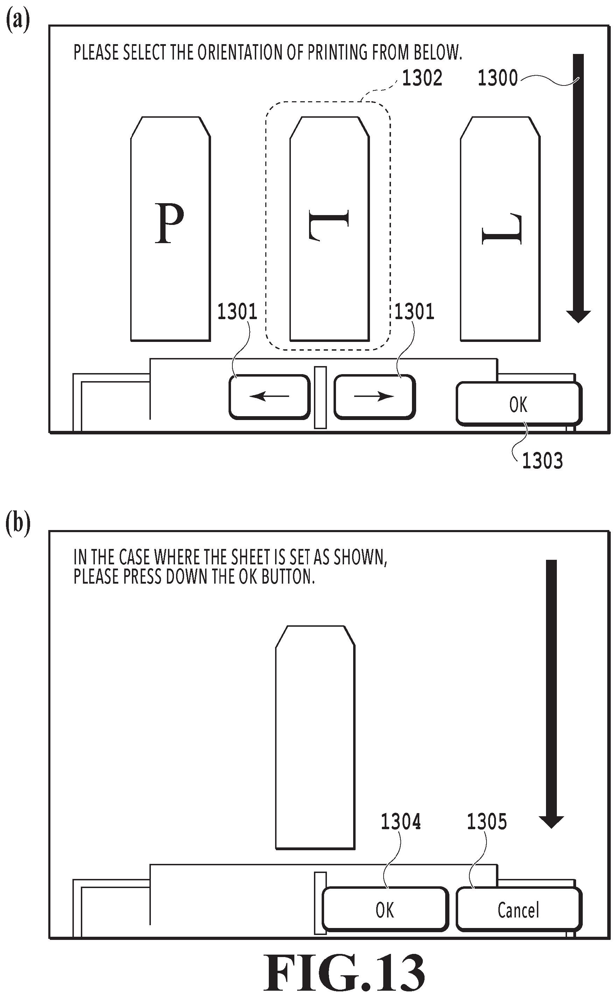

In S1107, in the operation displaying unit of the printer to be used, a guide screen for correctly setting a feed direction and an image rotation angle in which the plurality of "combinations of feed directions and image rotation angles" which can be established are set as options is displayed. Fig. 13(a) is a diagram showing an example of a guide screen for correctly setting a combination of a feed direction and an image rotation angle including the orientation of a flap portion of an envelope from the above-mentioned three combinations. In the guide screen of Fig. 13(a), a thick arrow 1300 indicates a direction in setting a sheet (feed direction). The user can operate left and right arrow buttons 1301 in the guide screen to move a frame 1302 of dashed line to select a "combination of a feed direction and an image rotation angle" intended by the user from the options. In the guide screen of Fig. 13(a), alphabets "P" and "L" in pictures each representing an envelope are capital letters of "Portrait" which means vertically long and "Landscape" which means horizontally long, respectively. Then, the orientations of these alphabet characters in the screen represent image rotation angles in the corresponding options. Note that image rotation angles only have to be such that the user can grasp a required image rotation angle, and each of the image rotation angles may be expressed by an illustration representing a text, a scenery, or the like in place of the above-described capital letters of alphabet. If the user who has completed the selection presses down an OK button 1303 in the guide screen, the processing proceeds to S1109.

In S1108, in the operation displaying unit of the printer to be used, a guide screen for correctly setting a feed direction and an image rotation angle in accordance with one "combination of a feed direction and an image rotation angle" which can be established is displayed. Fig. 13(b) is an example of a guide screen for correctly setting a feed direction including the orientation of a flap portion of an envelope. In a case where there is only one combination of a feed direction and an image rotation angle, a guide screen showing an appropriate feed direction is displayed. If the user who has confirmed that the sheet is correctly set presses down an OK button 1304, the processing proceeds to S1109. On the other hand, if the user presses down a cancel button 1305, the present processing is aborted.

In S1109, feed completion information is generated based on the user operation (the selecting operation or the confirmation operation) received via the operation displaying unit. In a case where the guide screen with options was displayed, a selection value based on the selecting operation of the user is obtained, and feed completion information in which a descriptive content of the media database information is narrowed down is generated. In the example of the guide screen shown in aforementioned Fig. 13(a), the frame 1302 of dashed line is at a position surrounding an envelope picture in the center. In a case where the OK button 1303 is pressed down in this state, feed completion information in which the combination is narrowed down to "combination 2" from among the above-mentioned "combination 1 to combination 3" is generated.

The above is the content of the processing in the printer to be used in the case of setting a sheet first.

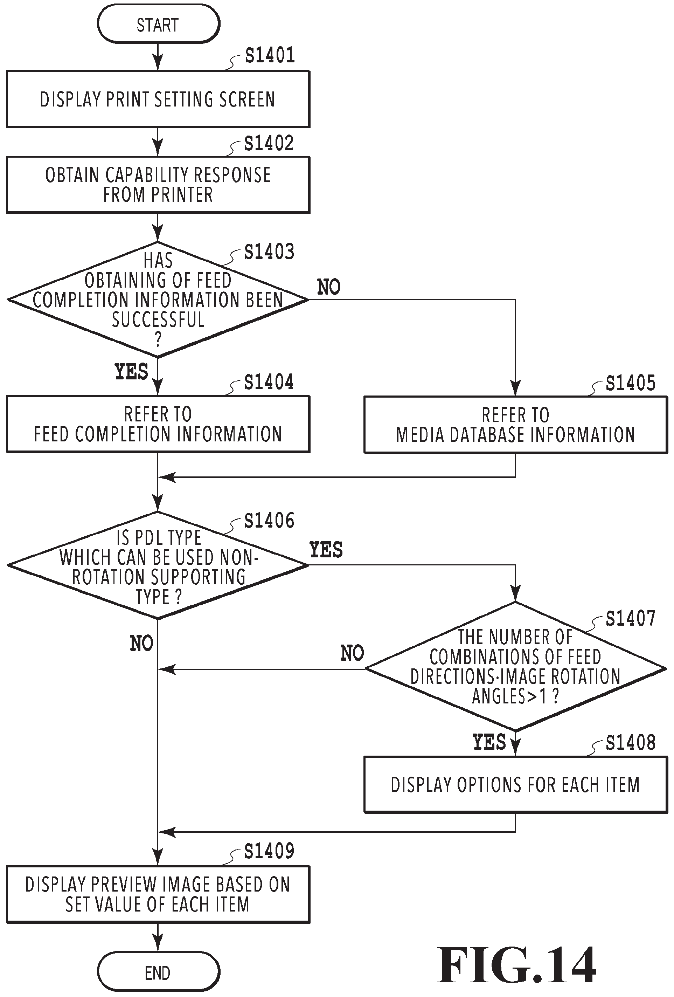

Next, print setting in a case of performing a printing instruction from a terminal to a printer to be used will be described. Fig. 14 is a flowchart showing a flow of processing in a case of performing print setting with the driver of the PC terminal 100 or the mobile terminal 200. Before starting the present flow, the driver detects a surrounding printer by mDNS via the communication network 500, and performs initial setting necessary for using the detected printer. Specifically, obtaining a response packet of the aforementioned media database information, instance of icons for printing, registration of IPP port information for OS standard printing and print property information, and the like are performed. Note that the obtained media database information is stored and held in the internal storage device 104. The present flow is implemented by the CPU 101 of the PC terminal 100/mobile terminal 200 reading out a predetermined program from the ROM 102, deploying the predetermined program onto the RAM 103, and executing the predetermined program. Note that in the following description, sign "S" means a step.

In S1401, the driver is activated, and a print setting screen for the user to perform a printing instruction for a document file or the like created by a document creation image editing application is displayed on the display unit 107.

In S1402, the latest information for using the printer to be used is obtained by IPP communication via the communication network 500. Specifically, in order to obtain a capability response relating to the presence or absence of a sheet which has already been set in the detected printer, a response packet of the aforementioned feed completion information is obtained.

In S1403, it is determined whether or not the obtaining of the feed completion information from the printer to be used has been successful. For example, in a case where a response packet of the feed completion information has been requested, but IPP communication has been failed, or in a case where a sheet has not been set, and the content of the feed completion information has been empty, it is determined that the obtaining of the feed completion information is failed. In a case where a sheet has already been set in the printer to be used, and the obtaining of the feed completion information has been successful, the processing proceeds to S1404. If the obtaining of the feed completion information has been failed, the processing proceeds to S1405.

In S1404, the obtained feed completion information is referred to. In addition, in S1405, media database information stored and held in advance is referred to.

Here, in a case where the PDL type which can be used in the printer to be used is a non-rotation supporting type represented by PWG-Raster, it is necessary for the terminal side to rotate an original image to an appropriate orientation, then convert the original image to a raster image, and transmit PDL data as mentioned above. In view of this, in S 1406, processing to be executed next is switched depending on whether the PDL type which can be used in the printer to be used is a rotation supporting type or a non-rotation supporting type. If the PDL type which can be used in the printer to be used is a non-rotation supporting-type PDL, the processing proceeds to S1407. On the other hand, if the PDL type which can be used in the printer to be used is a rotation supporting-type PDL, the processing proceeds to S1409.

In S1407, based on the feed completion information referred to in S1404 or the media database information referred to in S1405, it is determined whether there are a plurality of "combinations of feed directions and image rotation angles" which can be established. In a case of performing the determination based on the feed completion information, the number of "combinations of feed directions and image rotation angles" which can be established under a sheet size detected in the printer to be used is counted. As a result of the determination, if the number of "combinations of feed directions and image rotation angles" is two or more, the processing proceeds to S1408. If there is the number is one, the processing proceeds to S 1409.

In S1408, options for predetermined items in the displayed print setting screen are displayed based on the two or more combinations which can be established. Specifically, options for items such as "Orientation of printing" and "Image rotation angle" are displayed in accordance with set values selected/inputted by the user him/herself, and the feed completion information or the media database information obtained from the printer to be used are displayed.

In S1409, the set values for the respective items are obtained, and a preview image generated based on the set values is displayed. The user can visually check whether the feed direction and the image rotation angle are correct through the displayed preview image. If there is no problem in the result of checking the preview image, the user ends the print setting by pressing down an OK button, which is not shown, or the like, and presses down a print execution button, which is not shown. This causes a print job to be transmitted from the terminal to the printer to be used. Note that a configuration of detecting only a printer which supports a non-rotation supporting-type PDL at a timing before S1401, and omitting the processing of S1406 may be employed.

The above is the content of the print setting processing in the case of performing a printing instruction from the terminal to the printer to be used in which a sheet has been set. Here, the content will be described in further detail by presenting a specific example.

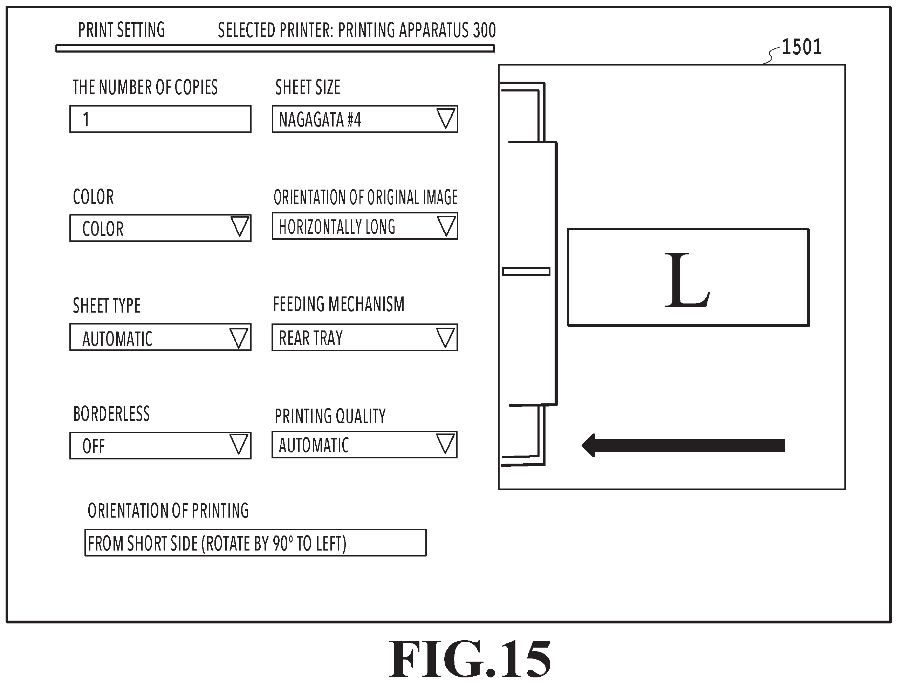

Fig. 15 is an example of a print setting screen in a case where an envelope of Nagagata #4 has been set on the rear tray 312 of the printing apparatus 300 before a printing instruction in a case where the PDL type is PWG-Raster. Note that in this case, it is assumed that no sheet is set in the cassette 310. This is a state where "Nagagata #4" has been set as the set value of the item "Sheet size", and "horizontally long (Landscape)" has been set as the set value of the item "Orientation of original image" by the user. Note that the "Orientation of original image" may be automatically set based on a result of image analysis in the driver or an upper-layer application. Then, a preview image in accordance with "Horizontally long (Landscape)", which is the set value of the item "Orientation of original image", is displayed in a preview region 1501. In this example, the "combinations of feed directions and image rotation angles" are narrowed down to the aforementioned "Combination 2" in accordance with "Nagagata #4" by using the feed completion information obtained from the printing apparatus 300. As a result, "From short side (rotate by 90° to left)" has been automatically determined as the set value of the item "Orientation of printing". In addition, "Rear tray", which is the set value of the item "Feeding mechanism", has also been automatically determined by the feed completion information. Moreover, a preview image visually indicating how to set a sheet to "Rear tray" is generated based on the result of the above-described narrowing, and is displayed in the preview region 1501. Then, in this example, the image rotation angle (90 degrees to left) narrowed down is expressed by the orientation of the alphabet "L", which represents "Horizontally long (Landscape)", but may be expressed by an orientation of an illustration representing a text or a scenery, for example. Such auxiliary information displayed in the preview region allows the user to visually grasp a positional relation of an original image relative to the feed tray and easily check whether the sheet is correctly fed, even in a case where the user cannot understand the meaning of each item in the print setting. Note that the preview image does not necessarily have to be displayed in the print setting screen, and may be displayed in a different window, for example. In the case of the specific example of Fig. 15, the set value of the item "Orientation of printing" is automatically determined only by the user selecting set values of two items "Sheet size" and "Orientation of original image" on the print setting screen. That is, since the user cannot wrongly select a feed direction and an image rotation angle which the rear tray 312 of the printing apparatus 300 does not support on the system, it becomes possible to prevent printing errors relating to the feed direction or the image rotation angle.

### <<Case of Performing Printing Instruction First, and Thereafter Setting Sheet>>

The flow in the case of performing print setting with the driver of the terminal and performing a printing instruction to the printer to be used is as described in the flowchart of aforementioned Fig. 14. In view of this, a difference in the case of performing print setting with the driver of the terminal before setting a sheet in the printer to be used will be mainly described below. Here, a case of performing print setting with the driver and transmitting PDL data of PWG-Raster, and thereafter printing an envelope of Kakugata #2 by using the manual feed tray 412 of the printing apparatus 400 will be described as an example. Since a manual feed tray in general does not have a feed configuration in which a large quantity of sheets can be stacked, the user who wants to perform IPP printing from a remote terminal first finishes necessary print setting and transmits a printing instruction, and thereafter sets a sheet on a manual feed tray.

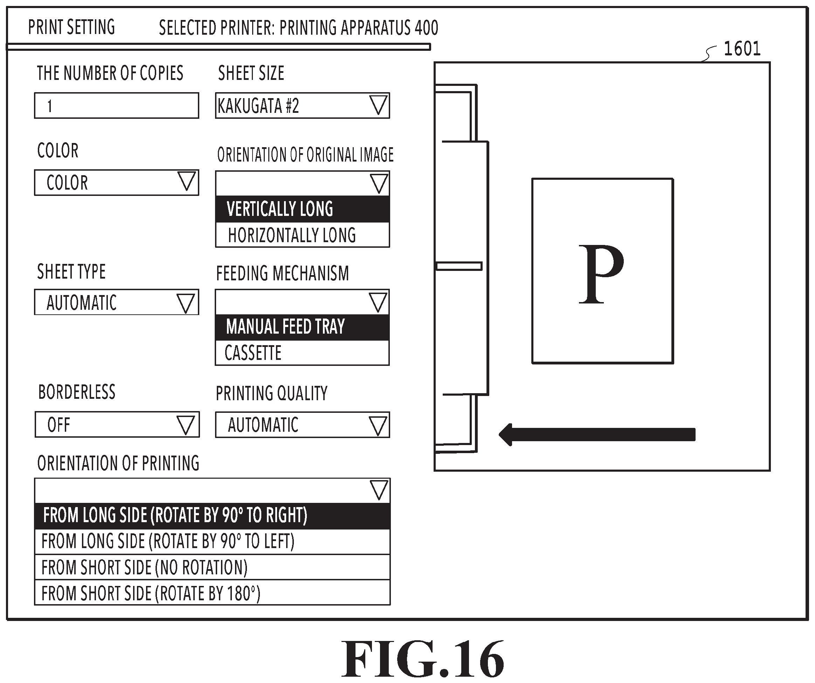

Fig. 16 is a diagram showing an example of a display state of a print setting screen in the present case. Now, in an initial print setting screen displayed at a time point at which the driver of the terminal is activated, "Kakugata #2" is selected by the user as the set value of the item "Sheet size". Then, no sheet is set in the cassette 410 and the manual feed tray 412 of the printing apparatus 400. Hence, the obtaining of feed completion information is failed (No in S1403), and options are displayed for predetermined items based on media database information (Yes in S1405 and S1406 and Yes in S1407, S1408). That is, "Vertically long" and "Horizontally long" as options for the item "Image orientation" and "Cassette" and "Manual feed tray" as options for the item "Feeding mechanism" are pull-down displayed. Moreover, in a case where the feed direction is from a long side, the image rotation angle is either rotation by 90 degrees to the left or rotation by 90 degrees to the right, while in a case where the feed direction is from a short side, the image rotation angle is either rotation by 180 degrees or rotation by 0 degrees. For this reason, these four are pull-down displayed as options for the item "Orientation of printing". Then, the fact that the user has selected "Manual feed tray ", "Vertically long (Portrait)", and "From a long side (rotation by 90° to the right)" is shown by highlight, a preview image reflecting the contents of these user selections is displayed in a preview region 1601. The user can appropriately set an envelope of Kakugata #2 in the manual feed tray 412 with reference to the displayed preview image.

### <Operation of Printer Received Print Job>

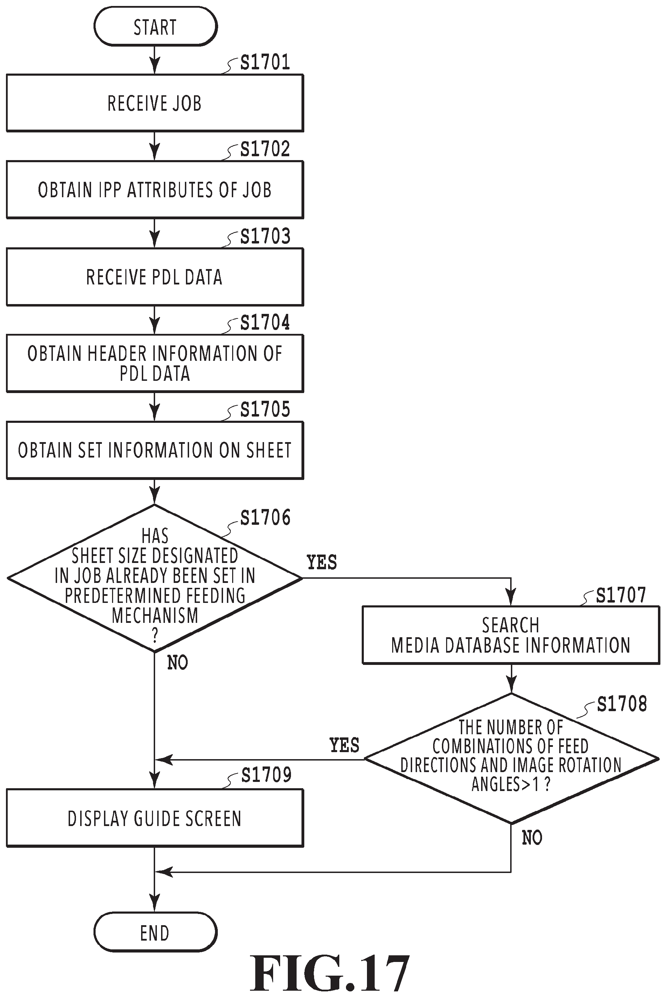

Next, a flow of processing relating to the setting of a sheet in a printer to be used at the time of receiving a print job from the terminal will be described with reference to a flowchart of Fig. 17. The flow of Fig. 17 is implemented by the CPU 301/401 of the printing apparatus 300/400 reading out a predetermined program from the ROM 302/402, deploying the predetermined program onto the RAM 303/403, and executing the predetermined program. Note that in the following description, sign "S" means a step.

In S1701, a print job (Create-Job command) transmitted by the terminal is received by the communication control unit 314/414. This causes a job ID to be issued, and returned to the terminal which has transmitted the print job.

In S1702, IPP attributes of the received print job is obtained. The IPP attributes contain information such as sheet size, sheet type, PDL type, feeding mechanism, and duplex/simplex printing. Note that whether information on the image rotation angle is contained in the IPP attributes depends on the driver, there are both cases where the information is contained and is not contained.

In S1703, PDL data which is associated with the above-mentioned job ID and transmitted by the terminal is received by the communication control unit 314/414.

In S1704, header information of the received PDL data is obtained. In the header information, a Leading Edge attribute which indicates the feed direction of a page and an Orientation attribute which indicates the image rotation angle are described. These two attributes correspond respectively to the aforementioned media-source-feed-direction attribute and media-source-feed-orientation attribute in the IPP attributes. That is, attribute values of the Leading Edge attribute and the Orientation attribute described in the header information have the same values which can be taken in the above-described two attributes in the IPP attributes. From the attribute value of the Orientation attribute described in the header information, information on an image rotation angle with higher reliability can be obtained.

In S1705, information indicating a set status of a sheet in the feeding mechanism is obtained. For example, the feed completion information stored in the RAM 303/403 is searched based on a sheet size indicated by the IPP attributes of the print job and the attribute values of the above-described two attributes in the header information of the PDL data. Alternatively, output values (detection results) of the sheet presence/absence detection sensor and the sheet width sensor provided in each feeding mechanism are obtained.

In S1706, based on the information indicating the set status of a sheet obtained in S1705, it is determined whether a sheet having the same size as the sheet size designated in the print job (the sheet size indicated in the IPP attributes) has already been set in a predetermined feeding mechanism. Here, the "predetermined feeding mechanism" means a specific cassette or feed tray designated in the print job, or a cassette or feed tray which matches conditions of a case where a feed destination is "automatically" designated in the print job. If a sheet having the designated sheet size has been set in the predetermined feeding mechanism, the processing proceeds to S1707, and if not, the processing proceeds to S1709.

In S1707, it is searched by using the media database information for whether or not there are a plurality of "combinations of feed directions and image rotation angles" which can be established under the sheet size designated in the print job.

In S1708, based on a result of the search in S1707, it is determined whether or not to perform a guide screen display. If there are two or more "combinations of feed directions and image rotation angles", the processing proceeds to S1709 for performing the guide screen display. On the other hand, if there is only one "combination of a feed direction and an image rotation angle", since it can be inferred that a sheet has appropriately been set, it is determined that there is no need to display a guide screen, and the present processing is ended without proceeding to S1709. A specific example in which a guide screen is not displayed includes a case where an envelope of Nagagata #4 is first set in the rear tray 312 of the printing apparatus 300 so as to be fed from a short side, and thereafter, a printing instruction designating an image rotation angle "180°" is performed from the terminal. This is because in a case where an envelope has already been set on the rear tray 312 from a short side (grasped in S1706), an effective image rotation angle is only one, that is, "180°" (see the table of aforementioned Fig. 8).

In S1709, a guide screen visually showing an appropriate feed method in accordance with the current sheet set status is displayed. Here, a specific example of the guide screen to be displayed is shown.

### <<Example of display (1) of a guide screen in a case where a sheet size designated in a print job has not been set (a sheet is set afterward)>>

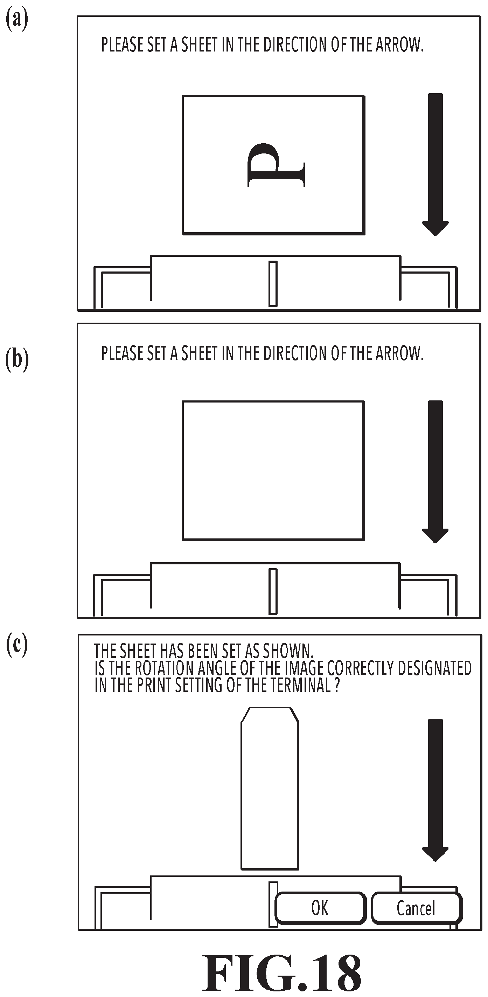

For example, it is assumed that although a printing instruction designating "Kakugata #2" as the sheet size, "Manual feed tray" as the feeding mechanism, "Feed from a long side" as the feed direction, and "90° to right" as the image rotation angle is performed to the printing apparatus 400, an envelope has not been set on the manual feed tray 412. In this case, a guide screen as shown in Fig. 18(a) is generated and displayed based on information grasped from the IPP attributes of the print job and the header information of the PDL data (No in S1706, S1709). Now, "Kakugata #2" is designated as the sheet size and the "Manual feed tray" is designated as the feeding mechanism in the IPP attributes. Then, "long-edge-first" as a value of the Leading Edge attribute and "portrait" as a value of the Orientation attribute are written in the header information. Based on these pieces of information, the printing apparatus 400 generates and displays a guide screen as shown in Fig. 18(a) which has a content prompting setting an envelope of Kakugata #2 on the manual feed tray from a long side. In this case, in a picture representing an envelope of Kakugata #2, which is drawn in the guide screen, the orientation of alphabet "P" expresses that a raster image (vertically long) to be printed is brought into a state of being rotated by 90 degrees to the right. In a case where it is detected by the sensor that a sheet has been set in accordance with the guide screen, execution of printing in accordance with the print job and the PDL data is started. In this way, by presenting, as auxiliary information, relative positional relations of the feed tray and the orientation of the sheet icon and the image rotation angle to the user, it becomes possible to print in a correct direction. Note that in the guide screen of Fig. 18(a), information representing the position of a flap which can be inferred from the sheet size, the feed direction, and the image rotation angle may be further added.

### <<Example of display (2) of a guide screen in a case where a sheet size designated in a job has not been set (a sheet is set afterward)>>

The Orientation attribute in header information is not necessarily always written as mentioned above. In view of this, in a case where a value of the Leading Edge attribute has been obtained from the header information, but a value of the Orientation attribute has not been obtained, a guide screen in which a character or the like is not displayed on a picture representing an envelope in an overlapped manner as shown in Fig. 18(b) may be displayed.

### <<Example of display of a guide screen in a case where a sheet size designated in a job has already been set (a sheet is set first)>>

For example, it is assumed that a printing instruction designating "Nagagata #4" as the sheet size, "Feed from a short side" as the feed direction, and "90° to left" as the image rotation angle is performed to the printing apparatus 300, and an envelope of Nagagata #4 has been set on the rear tray 312 to be fed from a short side. In this case, it can be grasped in S1706 that an envelope of Nagagata #4 has already been set on the rear tray 312 from a short side. In this case, as the rotation angle of a raster image, there are three possibilities, 180° if the original image is vertically long, and 90° to left or 90° to right if the original image is horizontally long (see the table of aforementioned Fig. 8). In view of this, a guide screen which prompts the user to check whether a print job and PDL data designating an image rotation angle which matches the orientation of the set sheet has been generated and transmitted is generated and displayed (Yes in S1706, Yes in S1708, S1709). Fig. 18(c) is an example of a guide screen provided with a message which prompts the user to check. If an appropriate print job and PDL data have been generated and transmitted, the user presses down an OK button 1801, which starts the execution of printing in accordance with the print job and PDL data. On the other hand, if a cancel button 1802 is pressed down, the execution of printing is aborted.

The above is the flow of processing relating to the setting of a sheet in a printer to be used at the time of receiving a print job.

### <Modification 1>

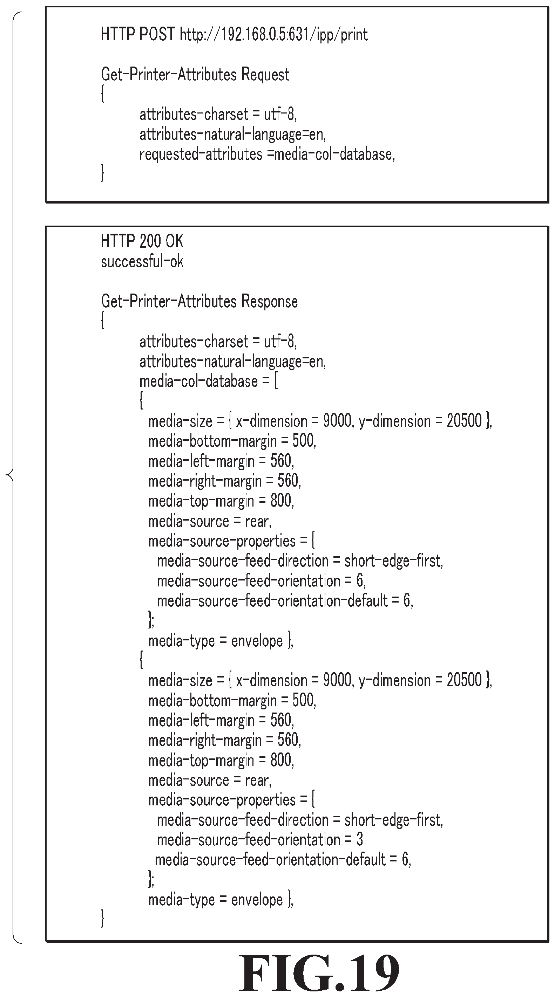

There are models of printers in which in a case of printing an envelope, the envelope needs to be fed such that a flap portion of the envelope is located at the trailing edge for printing, for example (see aforementioned Fig. 5(a)). In a print setting screen in a case of performing IPP printing using such a printer, it is desirable to set rotating the raster image by 180 degrees as a default setting value; however, there is no clear rule in IPP. In view of this, an attribute of a feed angle default ("media-source-feed-orientation-default") is provided as one of attributes of media feed properties (media-source-properties) of media database information for response. Fig. 19 shows an example of a response packet of media database information according to the present Modification. In the response packet shown in Fig. 19, "media-source-feed-orientation-default" is added directly below "media-source-feed-orientation" in "media-source-properties", and "6" is described as its value. The driver of the terminal may display "From a short side (rotate by 180 degrees)" as a default value of the item "Orientation of printing" in the print setting screen in the case of printing an envelope by referring to a value of the attribute of the feed angle default of such a received response packet. Alternatively, in a case of displaying options for the item "Orientation of printing" in the print setting screen (S1409 in the flow of Fig. 14), "From a short side (rotate by 180°)" may be displayed on top such that "From a short side (rotate by 180°)" is selected as a default setting as long as there is no change.

### <Modification 2>

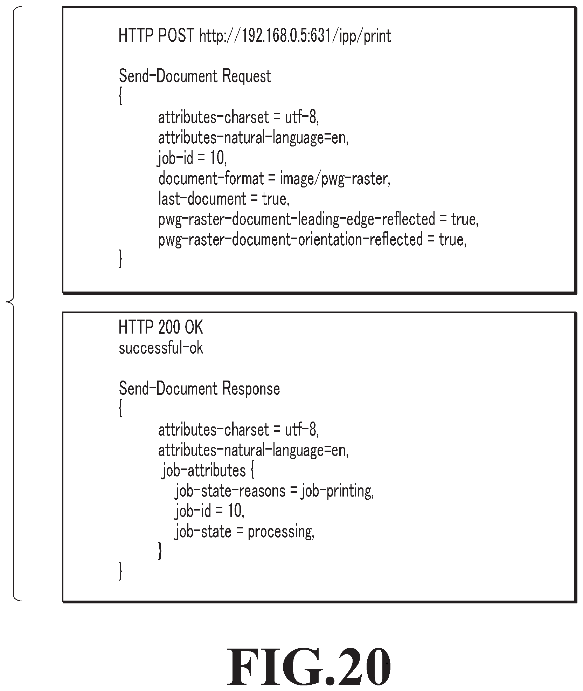

In the above-mentioned embodiments, the printer which has received a print job obtains values of the Leading Edge attribute and the Orientation attribute from header information of PDL data, and generates and displays a guide screen in accordance with the status at the time of reception (see Fig. 17). In this case, the above-described guide screen display may be performed only in a case where it is confirmed that the values of the Leading Edge attribute and the Orientation attribute contained in the header information of the PDL data are reliable. A specific method is that flag information indicating reliabilities of the above-described two attribute values is separately added in transmitting PDL data, for example. Then, only in a case where it is confirmed from the flag information that the reliabilities of the above-described two attribute values are high, the printer performs a display control of a guide screen. Fig. 20 is an example of a packet at the time of transmitting PDL data according to the present Modification. In Fig. 20, a pwg-raster-document-leading-edge-reflected attribute is an attribute indicating the reliability of the value of the Leading Edge attribute, and "true" indicating that the reliability is high is inputted as a flag value. In addition, a pwg-raster-document-orientation-reflected attribute is an attribute indicating the reliability of the value of the Orientation attribute, and "true" indicating that the reliability is high is inputted as a flag value. If the reliability is low, a value "false" is inputted. Based on the flag information indicating these reliabilities, it is determined whether the version of the driver is a version which supports writing of header information for a feed direction and an image rotation angle. Then, control of not displaying a guide screen may be performed in a case where the flag value is false (or in a case where flag information is not contained).

As described above, according to the present embodiments, the user can perform IPP printing by appropriately setting a sheet in a printer to be used. Particularly, even in a case of printing an envelope, the user can avoid confusion about whether to feed a sheet by setting a flap at the leading edge or at the trailing edge. Note that the present embodiments have been described giving an envelope as an example, the present embodiments can also be applied similarly to sheet sizes for which there are a plurality of combinations of feed directions and image rotation angles, like double postcards and greeting cards.

### (Other examples)

The present invention can also be implemented by processing in which a program for implementing one or more functions of the above-mentioned embodiments is supplied to a system or an apparatus via a network or a storage medium, and one or more processors in a computer of the system or the apparatus read and execute the program. Alternatively, the present invention can also be implemented by a circuit (for example, ASIC) which implements the one or more functions.

In addition, the present disclosure includes the following configurations and methods.

### [Configuration 1]

A printing apparatus which receives, from a client terminal, a print job in a format in accordance with IPP (Internet Printing Protocol) and which performs printing based on the received print job, the printing apparatus comprising:
a communication unit configured to communicate with the client terminal;
a control unit configured to cause a display unit to display a first guide screen presenting a possible combination of feed directions and rotation angles of an image for the printing, where the possible combination can be established under a sheet size of a sheet set in a feeding mechanism; and
a generation unit configured to generate first information indicating a determined combination which is presented in the first guide screen, wherein
the communication unit transmits, in response to a request from the client terminal, the first information generated by the generation unit.

### [Configuration 2]

The printing apparatus according to configuration 1, wherein
in a case where there are a plurality of possible combinations of feed directions and rotation angles of an image for the printing, where the plurality of possible combinations can be established under a sheet size of a sheet set in the feeding mechanism, the control unit causes the first guide screen presenting the plurality of possible combinations as options to be displayed, and
the generation unit generates the first information indicating a combination of the feed direction and the rotation angle, where the combination is determined based on a selecting operation of a user on the plurality of possible combinations presented in the first guide screen.

### [Configuration 3]

The printing apparatus according to configuration 1, wherein
in a case where there is one possible combination of a feed direction and a rotation angle of an image for the printing, where the one possible combination can be established under a sheet size of a sheet set in the feeding mechanism, the control unit causes the first guide screen presenting the one possible combination to be displayed, and
the generation unit generates the first information indicating a combination of the feed direction and the rotation angle, where the combination is determined based on a confirmation operation of a user on the one possible combination presented in the first guide screen.

### [Configuration 4]

The printing apparatus according to configuration 2 or 3, comprising:
a storage unit configured to hold second information in which possible combination of the feed directions and the rotation angles of an image for the printing, where the possible combination can be established under each sheet size, are defined, wherein
the possible combination of feed directions and rotation angles of an image for the printing which can be established under a sheet size of a sheet set in the feeding mechanism and which are presented in the first guide screen are specified by referring to the second information.

### [Configuration 5]

The printing apparatus according to any one of configurations 1 to 4, wherein
the control unit causes the display unit to display a second guide screen indicating a feed method in accordance with a sheet set status relative to the feeding mechanism at a time point at which the print job is received.

### [Configuration 6]

The printing apparatus according to configuration 5, wherein
the control unit obtains an attribute value of a feed direction and an attribute value of a rotation angle of an image for the printing from header information of PDL data according to the received print job, and causes the display unit to display the second guide screen.

### [Configuration 7]

The printing apparatus according to configuration 6, wherein
the control unit determines whether to display the second guide screen based on information which is contained in the header information of the PDL data and which indicates reliabilities of the attribute value of the feed direction and the attribute value of the rotation angle of an image for the printing.

### [Configuration 8]

The printing apparatus according to any one of configurations 5 to 7, wherein
in a case where a sheet having a sheet size designated in the print job is not set in the feeding mechanism at a time point at which the print job is received, the control unit causes the display unit to display the second guide screen which prompts feeding of a sheet having the sheet size designated in the print job in a feed direction designated in the print job.

### [Configuration 9]

The printing apparatus according to configuration 6, wherein
in a case where a sheet having a sheet size designated in the print job is set in the feeding mechanism at a time point at which the print job is received, and there are a plurality of possible combinations of the feed directions and the rotation angles of an image for the printing, the control unit causes the display unit to display the second guide screen which prompts confirmation as to whether a rotation angle which matches a direction of the set sheet is designated in the print job.

### [Configuration 10]

The printing apparatus according to configuration 6, wherein
in a case where a sheet having a sheet size designated in the print job is set in the feeding mechanism at a time point at which the print job is received, and there is one possible combination of the feed direction and the rotation angle of an image for the printing, the control unit does not cause the second guide screen to be displayed.

### [Configuration 11]

A client terminal for providing a print job in a format in accordance with IPP (Internet Printing Protocol) to a printing apparatus, the client terminal comprising:
a communication unit configured to communicate with the printing apparatus; and
a control unit configured to cause a display unit to display a print setting screen for generating the print job, wherein
in a case where there are a plurality of possible combinations of feed directions and rotation angles of an image for printing, where the plurality of possible combinations are specified by a capability response of the printing apparatus obtained by the communication unit and can be established in the printing apparatus, the control unit causes options for items corresponding respectively to the feed directions and the rotation angles in the print setting screen to be displayed.

### [Configuration 12]

The client terminal according to configuration 11, wherein
in a case where a format of PDL which can be used in the printing apparatus is a format which cannot include designation relating to image rotation, the control unit causes the options to be displayed.

### [Configuration 13]

The client terminal according to configuration 12, wherein
the format which cannot include designation relating to image rotation is PWG-Raster.

### [Configuration 14]

The client terminal according to any one of configurations 11 to 13, wherein
the control unit causes the display unit to further display a preview image based on set values selected from the displayed options.

### [Configuration 15]

The client terminal according to configuration 11, wherein
in a case where default values are included in the capability response for the feed direction and the rotation angle of an image for the printing under a specific sheet size, the control unit causes the default values to be displayed in items corresponding respectively to the feed direction and the rotation angle in the print setting screen of a case where the specific sheet size is designated.

### [Configuration 16]

A printing system in which a client terminal and a printing apparatus are connected via a network, wherein
the printing apparatus is a printing apparatus which receives, from the client terminal, a print job in a format in accordance with IPP (Internet Printing Protocol) and which performs printing based on the received print job, and includes:
   a control unit configured to cause a display unit to display a guide screen presenting a possible combination of feed directions and rotation angles of an image for the printing, where the possible combination can be established under a sheet size of a sheet set in a feeding mechanism;
   a generation unit configured to generate first information indicating a determined combination which is presented in the guide screen; and
a communication unit configured to transmit, in response to a request from the client terminal, the first information generated by the generation unit, and
the client terminal includes:
   a communication unit configured to communicate with the printing apparatus; and
   a control unit configured to cause a display unit to display a print setting screen for generating the print job, in which in a case where there are a plurality of possible combinations of feed directions and rotation angles of an image for the printing, where the plurality of possible combinations are specified by a capability response of the printing apparatus obtained by the communication unit and can be established in the printing apparatus, the control unit causes options for items corresponding respectively to the feed directions and the rotation angles in the print setting screen to be displayed.

### [Method 1]

A control method of a printing apparatus which receives, from a client terminal, a print job in a format in accordance with IPP (Internet Printing Protocol) and which performs printing based on the received print job, the control method comprising:
a control step of causing a display unit to display a first guide screen presenting a possible combination of feed directions and rotation angles of an image for the printing, where the possible combination can be established under a sheet size of a sheet set in a feeding mechanism;
a generation step of generating first information indicating a determined combination which is presented in the first guide screen; and
a transmission step of transmitting, in response to a request from the client terminal, the first information generated by the generation unit.

### [Method 2]

A control method of a client terminal for providing a print job in a format in accordance with IPP (Internet Printing Protocol) to a printing apparatus, the control method comprising:
an obtaining step of obtaining a capability response from the printing apparatus; and
a control unit of causing a display unit to display a print setting screen for generating the print job, wherein
in a case where there are a plurality of possible combinations of feed directions and rotation angles of an image for printing, where the plurality of possible combinations are specified by the capability response of the printing apparatus obtained in the obtaining step and can be established in the printing apparatus, the control step causes options for items corresponding respectively to the feed directions and the rotation angles in the print setting screen to be displayed.

### [Method 3]

A control method of a printing system in which a client terminal and a printing apparatus are connected via a network,
the printing apparatus being a printing apparatus which receives, from the client terminal, a print job in a format in accordance with IPP (Internet Printing Protocol) and which performs printing based on the received print job,
the control method comprising:
   causing the printing apparatus to perform:
      a control step of causing a display unit to display a guide screen presenting a possible combination of feed directions and rotation angles of an image for the printing, where the possible combination can be established under a sheet size of a sheet set in a feeding mechanism;
      a generation step of generating first information indicating a determined combination which is presented in the guide screen; and
      a transmission step of transmitting, in response to a request from the client terminal, the first information generated in the generation step; and
   causing the client terminal to perform:
      an obtaining step of obtaining a capability response from the printing apparatus; and
      a control step of causing a display unit to display a print setting screen for generating the print job, in which in a case where there are a plurality of possible combinations of feed directions and rotation angles of an image for the printing, where the plurality of possible combinations are specified by the capability response of the printing apparatus obtained in the obtaining step and can be established in the printing apparatus, the control step causes options for items corresponding respectively to the feed directions and the rotation angles in the print setting screen to be displayed.

### [Configuration 17]

A program for causing a computer to function as the printing apparatus according to any one of configurations 1 to 10.

### [Configuration 18]

A program for causing a computer to function as the client terminal according to any one of configurations 11 to 15.

### [Configuration 19]

A program for causing a computer to function as the printing system according to configuration 16.

The present invention is not limited to the above-described embodiments, and various changes and modifications are possible without departing from the spirit and scope of the present invention. Therefore, the following claims are attached in order to publicize the scope of the present invention.

This application claims the benefit of Japanese Patent Application No. 2023-151673, filed September 19, 2023, which is hereby incorporated by reference herein in its entirety.

## Claims

1. A printing apparatus which receives, from a client terminal, a print job in a format in accordance with IPP (Internet Printing Protocol) and which performs printing based on the received print job, the printing apparatus comprising:
a communication unit configured to communicate with the client terminal;
a control unit configured to cause a display unit to display a first guide screen presenting a possible combination of feed directions and rotation angles of an image for the printing, where the possible combination can be established under a sheet size of a sheet set in a feeding mechanism; and
a generation unit configured to generate first information indicating a determined combination which is presented in the first guide screen, wherein
the communication unit transmits, in response to a request from the client terminal, the first information generated by the generation unit.

2. The printing apparatus according to claim 1, wherein
in a case where there are a plurality of possible combinations of feed directions and rotation angles of an image for the printing, where the plurality of possible combinations can be established under a sheet size of a sheet set in the feeding mechanism, the control unit causes the first guide screen presenting the plurality of possible combinations as options to be displayed, and
the generation unit generates the first information indicating a combination of the feed direction and the rotation angle, where the combination is determined based on a selecting operation of a user on the plurality of possible combinations presented in the first guide screen.

3. The printing apparatus according to claim 1, wherein
in a case where there is one possible combination of a feed direction and a rotation angle of an image for the printing, where the one possible combination can be established under a sheet size of a sheet set in the feeding mechanism, the control unit causes the first guide screen presenting the one possible combination to be displayed, and
the generation unit generates the first information indicating a combination of the feed direction and the rotation angle, where the combination is determined based on a confirmation operation of a user on the one possible combination presented in the first guide screen.

4. The printing apparatus according to claim 2, comprising:
a storage unit configured to hold second information in which a possible combination of the feed directions and the rotation angles of an image for the printing, where the possible combination can be established under each sheet size, are defined, wherein
the possible combination of feed directions and rotation angles of an image for the printing which can be established under a sheet size of a sheet set in the feeding mechanism and which are presented in the first guide screen are specified by referring to the second information.

5. The printing apparatus according to claim 1, wherein
the control unit causes the display unit to display a second guide screen indicating a feed method in accordance with a sheet set status relative to the feeding mechanism at a time point at which the print job is received.

6. The printing apparatus according to claim 5, wherein
the control unit obtains an attribute value of a feed direction and an attribute value of a rotation angle of an image for the printing from header information of PDL data according to the received print job, and causes the display unit to display the second guide screen.

7. The printing apparatus according to claim 6, wherein
the control unit determines whether to display the second guide screen based on information which is contained in the header information of the PDL data and which indicates reliabilities of the attribute value of the feed direction and the attribute value of the rotation angle of an image for the printing.

8. The printing apparatus according to claim 5, wherein
in a case where a sheet having a sheet size designated in the print job is not set in the feeding mechanism at a time point at which the print job is received, the control unit causes the display unit to display the second guide screen which prompts feeding of a sheet having the sheet size designated in the print job in a feed direction designated in the print job.

9. The printing apparatus according to claim 6, wherein
in a case where a sheet having a sheet size designated in the print job is set in the feeding mechanism at a time point at which the print job is received, and there are a plurality of possible combinations of the feed directions and the rotation angles of an image for the printing, the control unit causes the display unit to display the second guide screen which prompts confirmation as to whether a rotation angle which matches a direction of the set sheet is designated in the print job.

10. The printing apparatus according to claim 6, wherein
in a case where a sheet having a sheet size designated in the print job is set in the feeding mechanism at a time point at which the print job is received, and there is one possible combination of the feed direction and the rotation angle of an image for the printing, the control unit does not cause the second guide screen to be displayed.

11. A client terminal for providing a print job in a format in accordance with IPP (Internet Printing Protocol) to a printing apparatus, the client terminal comprising:
a communication unit configured to communicate with the printing apparatus; and
a control unit configured to cause a display unit to display a print setting screen for generating the print job, wherein
in a case where there are a plurality of possible combinations of feed directions and rotation angles of an image for printing, where the plurality of possible combinations are specified by a capability response of the printing apparatus obtained by the communication unit and can be established in the printing apparatus, the control unit causes options for items corresponding respectively to the feed directions and the rotation angles in the print setting screen to be displayed.

12. The client terminal according to claim 11, wherein
in a case where a format of PDL which can be used in the printing apparatus is a format which cannot include designation relating to image rotation, the control unit causes the options to be displayed.

13. The client terminal according to claim 12, wherein
the format which cannot include designation relating to image rotation is PWG-Raster.

14. The client terminal according to claim 11, wherein
the control unit causes the display unit to further display a preview image based on set values selected from the displayed options.

15. The client terminal according to claim 11, wherein
in a case where default values are included in the capability response for the feed direction and the rotation angle of an image for the printing under a specific sheet size, the control unit causes the default values to be displayed in items corresponding respectively to the feed direction and the rotation angle in the print setting screen of a case where the specific sheet size is designated.

16. A printing system in which a client terminal and a printing apparatus are connected via a network, wherein
the printing apparatus is a printing apparatus which receives, from the client terminal, a print job in a format in accordance with IPP (Internet Printing Protocol) and which performs printing based on the received print job, and includes:
a control unit configured to cause a display unit to display a guide screen presenting a possible combination of feed directions and rotation angles of an image for the printing, where the possible combination can be established under a sheet size of a sheet set in a feeding mechanism;
a generation unit configured to generate first information indicating a determined combination which is presented in the guide screen; and
a communication unit configured to transmit, in response to a request from the client terminal, the first information generated by the generation unit, and
the client terminal includes:
a communication unit configured to communicate with the printing apparatus; and
a control unit configured to cause a display unit to display a print setting screen for generating the print job, in which in a case where there are a plurality of possible combinations of feed directions and rotation angles of an image for the printing, where the plurality of possible combinations are specified by a capability response of the printing apparatus obtained by the communication unit and can be established in the printing apparatus, the control unit causes options for items corresponding respectively to the feed directions and the rotation angles in the print setting screen to be displayed.

17. A control method of a printing apparatus which receives, from a client terminal, a print job in a format in accordance with IPP (Internet Printing Protocol) and which performs printing based on the received print job, the control method comprising:
a control step of causing a display unit to display a first guide screen presenting a possible combinations of feed directions and rotation angles of an image for the printing, where the possible combination can be established under a sheet size of a sheet set in a feeding mechanism;
a generation step of generating first information indicating a determined combination which is presented in the first guide screen; and
a transmission step of transmitting, in response to a request from the client terminal, the first information generated in the generation step.

18. A control method of a client terminal for providing a print job in a format in accordance with IPP (Internet Printing Protocol) to a printing apparatus, the control method comprising:
an obtaining step of obtaining a capability response from the printing apparatus; and
a control step of causing a display unit to display a print setting screen for generating the print job, wherein
in a case where there are a plurality of possible combinations of feed directions and rotation angles of an image for printing, where the plurality of possible combinations are specified by the capability response of the printing apparatus obtained in the obtaining step and can be established in the printing apparatus, the control step causes options for items corresponding respectively to the feed directions and the rotation angles in the print setting screen to be displayed.

19. A control method of a printing system in which a client terminal and a printing apparatus are connected via a network,
the printing apparatus being a printing apparatus which receives, from the client terminal, a print job in a format in accordance with IPP (Internet Printing Protocol) and which performs printing based on the received print job,
the control method comprising:
causing the printing apparatus to perform:
a control step of causing a display unit to display a guide screen presenting a possible combinations of feed directions and rotation angles of an image for the printing, where the possible combination can be established under a sheet size of a sheet set in a feeding mechanism;
a generation step of generating first information indicating a determined combination which is presented in the guide screen; and
a transmission step of transmitting, in response to a request from the client terminal, the first information generated in the generation step; and
causing the client terminal to perform:
an obtaining step of obtaining a capability response from the printing apparatus; and
a control step of causing a display unit to display a print setting screen for generating the print job, in which in a case where there are a plurality of possible combinations of feed directions and rotation angles of an image for the printing, where the plurality of possible combinations are specified by the capability response of the printing apparatus obtained in the obtaining step and can be established in the printing apparatus, the control step causes options for items corresponding respectively to the feed directions and the rotation angles in the print setting screen to be displayed.

20. A program for causing a computer to execute the control method of a printing apparatus according to claim 17.

21. A program for causing a computer to execute the control method of a client terminal according to claim 18.

22. A program for causing a computer to execute the control method of a printing system according to claim 19.
